# EUROPÄISCHE PATENTSCHRIFT

(11) **EP 3 224 902 B1**
(45) Veröffentlichungstag und Bekanntmachung des Hinweises auf die Patenterteilung: **18.03.2020**
(21) Anmeldenummer: 15767114.0
(22) Anmeldetag: 10.09.2015
(51) Int. Cl.: H01Q 1/50

(54) **ÜBERWACHUNGSVORRICHTUNG FÜR EINE SENDEANTENNENANLAGE UND VERFAHREN ZUR ÜBERWACHUNG EINER SENDEANTENNENANLAGE**
MONITORING APPARATUS FOR A TRANSMITTING ANTENNA SYSTEM AND METHOD FOR MONITORING A TRANSMITTING ANTENNA SYSTEM
DISPOSITIF DE SURVEILLANCE POUR UNE INSTALLATION D'ANTENNES D'ÉMISSION ET PROCÉDÉ DE SURVEILLANCE D'UNE INSTALLATION D'ANTENNE D'ÉMISSION

(30) Priorität: 25.11.2014 DE 102014224037
(43) Veröffentlichungstag der Anmeldung: 04.10.2017
(73) Patentinhaber: Media Broadcast GmbH, 51103 Köln (DE)
(72) Erfinder: KIRPAL, Peter, 63846 Laufach (DE)
(74) Vertreter: dompatent von Kreisler Selting Werner - Partnerschaft von Patent- und Rechtsanwälten mbB
(86) Internationale Anmeldenummer: PCT/EP2015/070770
(87) Internationale Veröffentlichungsnummer: WO 2016/082953

(56) Entgegenhaltungen:
- WO-A1-2014/032650
- DE-A1-102013 014 476
- DE-A1-102015 001 493
- US-A1- 2014 268 454

## Beschreibung

Die vorliegende Erfindung betrifft eine Sendeantennenanlagen-Überwachungsvorrichtung mit einem Störlichtbogensensor. Des Weiteren wird eine Sendeantennenanlagen-Überwachungsvorrichtung mit mehreren Überwachungsmodulen zur jeweiligen Überwachung unterschiedlicher elektrischer Parameter der Sendeantennenanlage vorgeschlagen. Auch umfasst die Erfindung ein Verfahren zur Überwachung einer Sendeantennenanlage mittels zumindest eines Störlichtbogensensors.

In den Druckschriften DE-A-10 2013 014 476, WO-A-2014/032 650, DE-A-10 2015 001 493 und US-A-2014/628 454 sind Sendeantennenanlagen sowie Verfahren zur Überwachung von Sendeantennenanlagen beschrieben. Insbesondere ist in der Druckschrift DE-A-10 2015 001 493 eine Vorrichtung zum Überwachen von Sendeantennenanlagen beschrieben. Bei der Überwachungsvorrichtung ist eine Auskoppelvorrichtung vorgesehen, mittels derer ein Detektionssignal aus einem Leistungstransportpfad entkoppelt wird. Dabei wird das Detektionssignal berührungslos am Innenleiter des Leistungstransportpfades abgegriffen. Das abgegriffene Detektionssignal wird anschließend verarbeitet und ausgewertet. Hierzu wird in der Druckschrift DE-A-10 2015 001 493 vorgeschlagen, das Detektionssignal in einem Frequenzbereich oberhalb von 98 MHz auszuwerten. Bei der Detektionsvorrichtung gemäß der Druckschrift DE-A-10 2015 001 493 ist nicht vorgesehen, das Detektionssignal in einem niederfrequenten Bereich zwischen 0 und 60 kHz auszuwerten. Auch ist in der zitierten Druckschrift nicht vorgesehen, das Detektionssignal durch direktes, galvanisches Anschließen an den Innenleiter zu auszukoppeln.

Weiterhin ist in der Druckschrift DE-A-10 2013 014 476 eine Sendeantennenanlage mit einer Überwachungsvorrichtung beschrieben. Bei der in der genannten Druckschrift beschriebenen Sendeantennenanlage ist vorgesehen, dass der Leistungstransportpfad während des Betriebs der Senderantennenanlage überwacht wird. Dabei wird insbesondere der ohmsche Widerstand eines Abschnitts des Leistungstransportpfads während des Betriebs gemessen. Sobald der gemessene Wert einen vorgegebenen Toleranzbereich verlässt, wird ein Defekt in der Sendeantennenanlage angenommen. In der Druckschrift DE-A-10 2013 014 476 ist keine Messsignalabgreifleitung zum galvanischen Anschließen an den Innenleiter des Leistungstransportpfades vorgesehen. Darüber hinaus ist auch nicht vorgesehen, ein Messsignal in einem niederfrequenten Bereich zwischen 0 und 60 kHz zu erfassen.

Darüber hinaus ist in der Druckschrift WO-A-2014/032 650 eine Vorrichtung und ein Verfahren zur Lichtbogenerkennung in Photovoltaikanlagen beschrieben.

Schließlich ist in der Druckschrift US-A-2014/268 454 ein Verfahren zur Leistungssteuerung in einem Leistungstransportpfad sowie ein Schaltkreis zur Unterbrechung eines Leistungspfades beschrieben.

Sendeantennenanlagen der hier betroffenen Art sind UKW/DAB- und DVBT-Sendeantennenanlagen. Über diese werden Informationen auch in weit entfernt gelegene Gebiete übersendet. Dieses bedeutet, dass eine hochfrequente elektrische Leistung verwendet werden muss, um diese Signale über eine Sendeantenne versenden zu können, welche mit denen bei kleineren Sendeanlagen nicht vergleichbar ist. Hierfür sind Sendeleistungen im kW-Bereich notwendig. Die gattungsgemäßen Sendeantennenanlagen sind oftmals an Stahlgittermasten oder an geschlossenen Fernmeldetürmen in exponierten Positionen angeordnet. Diese unterliegen aufgrund der sehr langen Betriebszeit dieser Anlagen verschiedenen Einflüssen. Nicht ungewöhnlich sind Betriebszeiten von 30 Jahren und länger, so dass Effekte wie Korrosion, Materialermüdung, Schwitzwassereinlagerung oder andere Veränderungen eintreten können, welche die Betriebssicherheit der Sendeantennenanlagen beeinflussen und gegebenenfalls gefährden können.

Aufgabe der vorliegenden Erfindung ist es daher, die Betriebssicherheit von derart großen Sendeantennenanlagen permanent zu überwachen, um mögliche Emergency Situationen frühzeitig zu erkennen.

Diese Aufgabe wird mit einer Sendeantennenanlagen-Überwachungsvorrichtung mit den Merkmalen des Anspruchs 1, mit einer weiteren Sendeantennenanlagen-Überwachungsvorrichtung mit den Merkmalen des Anspruchs 16 sowie mit einem Verfahren zur Überwachung einer Sendeantennenanlage mit den Merkmalen des Anspruchs 10 gelöst. Weitere vorteilhafte Ausgestaltungen und Weiterbildungen gehen aus den zugehörigen Unteransprüchen wie auch aus den nachfolgenden Beschreibungen, aber auch aus den einzelnen Figuren hervor. Es können ein oder mehrere Merkmale aus den jeweiligen unabhängigen Ansprüchen durch eines oder mehrere Merkmale aus den anderen Unteransprüchen, aus der Beschreibung wie auch unter Bezugnahme auf die Figuren ersetzt, ergänzt oder aber auch gestrichen werden. Weitere vorteilhafte Ausgestaltungen ergeben sich ebenfalls durch Kombinationen der verschiedenen offenbarten Merkmale, auch wenn diese in der Beschreibung so nicht explizit miteinander verknüpft wurden.

Insbesondere wird zur Lösung der Aufgabe eine Überwachungsvorrichtung für eine Sendeantennenanlage, die einen koaxialen Leistungstransportpfad, welche einen Innenleiter und einen Außenleiter aufweist, mit einer Messsignalabgreifleitung zum galvanischen Anschließen an den Innenleiter und einer Auswerte- und Ansteuereinheit mit einem mit der Messsignalabgreifleitung verbundenen Eingang und mit einem Ausgang, und einem Unterbrechungsschalter zum Unterbrechen der Sendesignal-Versorgung der Sendeantennenanlage vorgeschlagen, wobei der Unterbrechungsschalter mittels eines Ausgangssignals der Auswerte- und Ansteuereinheit ein- und ausschaltbar ist und wobei die Auswerteeinheit einem vorgegebenen niederfrequenten Frequenzbereich zwischen 0 Hz und 60 kHz, insbesondere in einem hörbaren Frequenzbereich zwischen 0 Hz und 20 kHz, 0 Hz und 19 kHz, 0 Hz und 15 kHz, 0 Hz und 5 kHz oder 0 Hz und 4 kHz mit einem Schwellwert vergleicht und dann, wenn der Messwert in dem besagten Frequenzbereich größer ist als der Schwellwert, an ihrem Ausgang ein Ausschaltsignal zum zumindest zeitweisen Ausschalten des Unterbrechungsschalters ausgibt.

Dabei weist die Auswerte- und Ansteuereinheit einen Lichtbogen- bzw. Störlichtbogendetektor auf. Dieser Detektor wertet das Messsignal in einem vorgebbaren, bevorzugten Frequenzbereich aus. Dabei ist es von Vorteil, die Auswertung auf die genannten Frequenzbereiche zu beschränken, da in diesen Frequenzbereichen das Störlichtbogensignal besonders gut zu detektieren ist. Außerdem sind die genannten Frequenzbereiche ausreichend weit von dem Frequenzbereich entfernt, in dem das Nutzsignal gesendet wird. Dadurch wird gewährleistet, dass es zu keiner signifikanten Überlagerung von Nutz- und Störsignal kommen kann. Hierdurch kann das zu detektierende Störsignal besonders gut detektiert werden, da es vom Nutzsignal separiert ist.

Darüber hinaus wird durch den direkten, galvanischen Abgriff des Signals am Innenleiter ein niederohmiger Abgriff des Signals ermöglicht. Dadurch kann die Auswerte- und Ansteuereinheit mit einem deutlich stärkeren Signal versorgt werden, als dies der Fall wäre, wenn etwa der Abgriff induktiv erfolgen würde.

Bei einer Ausführungsform der Erfindung kann vorgesehen sein, dass der mit dem Schwellwert verglichene Messwert einen Intensitätswert des Messsignals darstellt. Hierbei kann beispielsweise ein Intensitätswert, der bei einer einzelnen Frequenz gemessen wird, mit dem vorgebbaren Schwellwert verglichen werden. Dieser Intensitätswert kann beispielsweise bei 60 kHz, bei 20 kHz oder bei 19 kHz gemessen werden.

Bei einer weiteren Ausführungsform kann vorgesehen sein, dass der Messwert aus einer Messung in einem vorgegebenen Frequenzbereich ermittelt wird. Dabei ist es möglich, beispielsweise den arithmetischen Mittelwert des Messsignals in einem Frequenzbereich von 0 Hz bis 60 kHz oder von 0 Hz bis 20 kHz (oder einem der zuvor genannten Frequenzbereiche), als Messwert zu verwenden, der mit einem Schwellwert verglichen wird. Auch ist es möglich, den arithmetischen Mittelwert des Betrages des Messsignals in einem der zuvor genannten Frequenzbereiche als Messwert zu verwenden. Weiterhin kann auch die Varianz oder die Standardabweichung des Messsignals in einem vorgebbaren Frequenzbereich als Messwert verwendet werden.

Bei einer bevorzugten Ausführung der Erfindung kann weiterhin vorgesehen sein, dass die Auswerte- und Ansteuereinheit nach einem Ausschaltsignal automatisch ein Einschaltsignal für den Unterbrechungsschalter ausgibt und überprüft, ob der Messwert in dem besagten Frequenzbereich größer ist als der Schwellwert, woraufhin, wenn dies der Fall ist, die Auswerte- und Ansteuereinheit wieder ein Ausschaltsignal zum Ausschalten des Unterbrechungsschalters ausgibt.

Durch das mehrmalige Ein- und Ausschalten des Unterbrechungsschalters kann überprüft werden, ob es sich bei der detektieren Störung um eine kurzzeitige Störung handelt, oder ob diese Störung dauerhaft vorliegt. Häufig verschwindet eine Störung bereits nach dem Ausschalten und dem Wiedereinschalten der Sendeantennenanlage. In diesem Fall kann die Störung dann meist ignoriert werden. Ist die Störung jedoch von längerer Dauer und nicht durch ein einfaches Aus- und Einschalten behebbar, so kann die Sendeantennenanlage im Anschluss dauerhaft ausgeschaltet werden, bis das Problem etwa durch einen Service-Techniker behoben wurde.

In einer Ausgestaltung der Erfindung kann vorgesehen sein, dass die Auswerte- und Ansteuereinheit wechselweise Einschalt- und Ausschaltsignale für den Unterbrechungsschalter aussendet, und zwar solange, bis der Messwert in dem besagten Frequenzbereich größer ist als der Schwellwert, wobei nach einer vorgegebenen Anzahl von Wiederholungen der wechselweisen Ausgabe von Einschalt- und Ausschaltsignalen der Unterbrechungsschalter ausgeschaltet bleibt.

Auf diese Weise kann überprüft werden, ob die Störung durch ein mehrmaliges Aus- und Einschalten der Sendeantennenanlage behoben werden kann. Dabei kann vorgegeben sein, wie häufig die Sendeantennenanlage aus- und eingeschaltet werden soll, bevor die Sendeantennenanlage endgültig abgeschaltet werden soll. Beispielsweise kann hierbei vorgegeben sein, dass die Sendeantennenanlage insgesamt drei Mal aus- und eingeschaltet wird, bis sie dann endgültig ausgeschaltet wird, sofern das Störsignal immer noch vorhanden ist.

In einer bevorzugten Ausgestaltung der Erfindung kann vorgesehen sein, dass die Messsignalabgreifleitung eine λ/4-Leitung ist, wobei λ die Wellenlänge der Trägerfrequenz des Sendesignals der Sendeantennenanlage ist.

Weiterhin kann in einer Ausführungsform der Erfindung vorgesehen sein, dass für eine Sendeantennenanlage mit einer galvanisch offenen Antenne die Auswerte- und Ansteuereinheit über die Messsignalabgreifleitung einen Messstrom in den Innenleiter einprägt und den Widerstand zwischen Außenleiter und Innenleiter des Leistungspfads misst und, wenn der gemessene Widerstand kleiner ist als ein vorgebbarer Minimalwiderstand, an ihrem Ausgang ein Ausschaltsignal für den Unterbrechungsschalter ausgibt und/oder an ihrem Ausgang ein Anzeigesignal zur optischen Anzeige des gemessenen Widerstands oder eines diesen charakterisierenden Werts ausgibt.

Bei dieser Messung handelt es sich um einen Isolationswiderstandsmessung. Durch die Isolationswiderstandmessung kann eine Fehlfunktion oder ein Mangel der Antennenanlage bereits frühzeitig erkannt werden. Fällt der gemessene Widerstand unter einen vorgebbaren Schwellwert, so wird die Sendeantennenanlage ausgeschaltet und/oder eine Warnung ausgeben. Der Isolationswiderstand kann beispielsweise dadurch herabsinken, dass Feuchtigkeit oder Nässe in die Antennenanlage eindringt und dies eine Erhöhung der Leitfähigkeit von konstruktiv notwendigen Isolationsbauteilen bewirkt. Infolgedessen ist die Gefahr eines Kurzschlusses und einer Beschädigung oder sogar Zerstörung der Antennenanlage gegeben.

Die Warnung bei einer detektierten Fehlfunktion kann durch ein optisches Signal erfolgen. Dabei können beispielsweise LEDs kettenförmig nebeneinander angeordnet sein, wobei das Aufleuchten jeder einzelnen LED anzeigen kann, in welchem Widerstandsbereich sich der gemessene Widerstandswert befindet.

Darüber hinaus kann in einer Ausführungsform der Erfindung vorgesehen sein, dass für eine Sendeantennenanlage mit einer galvanisch geschlossenen Antenne die Auswerte- und Ansteuereinheit über die Messsignalabgreifleitung eine Messung des Widerstands des elektrischen Kreises aus Innenleiter, Außenleiter und Antenne durchführt und, wenn der gemessene Widerstand größer ist als ein vorgebbarer zulässiger Maximalwiderstand, an ihrem Ausgang ein Ausschaltsignal für den Unterbrechungsschalter ausgibt, und/oder ein Anzeigesignal zur optischen Anzeige des gemessenen Widerstands oder eines diesen charakterisierenden Werts ausgibt.

Auf diese Weise können Mängel, die in einer Komponente der Antennenanlage auftreten, detektiert werden. In einem ordnungsgemäßen Zustand der Antennenanlage beträgt der beschriebene Widerstand, der auch als Schleifenwiderstand bezeichnet wird, typischerweise nur einige 10 mΩ bis einige 100 mΩ. Wird ein größerer Widerstand gemessen, beispielsweise ein Widerstand, der größer oder gleich 1 Ω ist, so kann davon ausgegangen werden, dass mindestens eine Komponente der Antennenanlage einen Mangel aufweist. Dieser Mangel kann insbesondere durch Alterungserscheinungen wie beispielsweise Korrosion einzelner Antennenkomponenten entstehen.

Bei einer permanenten, oder auch nur zeitweisen Beaufschlagung eines zu überwachenden Antennensystems mit einer Gleichspannung (d.h. es fließt permanent oder auch nur zeitweise ein auch nur geringer Gleichstrom immer in die gleiche elektrische Richtung) kann es zu einer Ionenwanderung mit der Folge einer Materialverfrachtung kommen. Um dies zu unterbinden, muss die zu Messzwecken eingespeiste Gleichspannung mit einer (wenn auch) sehr niedrigen Frequenz umgetastet werden.

Weiterhin kann bei einer Ausführungsform der Erfindung vorgesehen sein, dass die Messsignalabgreifleitung an den Innenleiter eines Brückensteckers der Sendeantennenanlage galvanisch anschließbar ist.

Weiterhin wird zur Lösung der zuvor genannten Aufgabe ein Verfahren zur Überwachung einer Sendeantennenanlage, die einen Leistungstransportpfad mit einem Innenleiter und einem Außenleiter aufweist, vorgeschlagen, wobei bei dem Verfahren von dem Innenleiter über eine mit diesem galvanisch verbundenen Messsignalabgreifleitung ein Messsignal abgegriffen wird, und ein Messwert des Messsignals in einem vorgebbaren Frequenzbereich zwischen 0 und 60 kHz, insbesondere zwischen 0 und 20 kHz, mit einem Schwellwert verglichen wird und dann, wenn der Messwert in dem besagten Frequenzbereich größer ist als der Schwellwert, die Zufuhr eines Sendesignals zur Sendeantennenanlage zumindest zeitweise unterbrochen wird.

In einer bevorzugten Ausführungsform des erfindungsgemäßen Verfahrens kann vorgesehen sein, dass als Messsignalabgreifleitung eine λ/4-Leitung verwendet wird, wobei λ die Wellenlänge der Trägerfrequenz des Sendesignals der Sendeantennenanlage ist.

In einer weiteren Ausgestaltung des erfindungsgemäßen Verfahrens kann vorgesehen sein, dass für eine Sendeantennenanlage mit einer galvanisch offenen Antenne über die Messsignalabgreifleitung ein Messstrom in den Innenleiter einprägt wird und der Widerstand zwischen Außenleiter und Innenleiter des Leistungspfads gemessen wird und, wenn der gemessene Widerstand kleiner ist als ein vorgebbarer Minimalwiderstand, die Zufuhr des Sendesignals zur Sendeantennenanlage zumindest zeitweise unterbrochen wird und/oder ein Anzeigesignal zur optischen Anzeige des gemessenen Widerstands oder eines diesen charakterisierenden Werts ausgegeben wird.

Weiterhin kann in einer Ausgestaltung der Erfindung vorgesehen sein, dass für eine Sendeantennenanlage mit einer galvanisch geschlossenen Antenne über die Messsignalabgreifleitung eine Messung des Widerstands des elektrischen Kreises aus Innenleiter, Außenleiter und Antenne durchgeführt wird und, wenn der gemessene Widerstand größer ist als ein vorgebbarer zulässiger Maximalwiderstand, an ihrem Ausgang ein Ausschaltsignal für den Unterbrechungsschalter ausgegeben wird, und/oder ein Anzeigesignal zur optischen Anzeige des gemessenen Widerstands oder eines diesen charakterisierenden Werts ausgegeben wird.

Auch kann in einer Ausgestaltung des erfindungsgemäßen Verfahrens vorgesehen sein, dass die Messsignalabgreifleitung an den Innenleiter eines Brückensteckers der Sendeantennenanlage galvanisch angeschlossen wird.

Weiterhin wird zur Lösung der vorstehend genannten Aufgabe eine Sendeantennenanlage mit einem Leistungstransportpfad mit einem Innenleiter und einem Außenleiter und mit einer Überwachungsvorrichtung mit den zuvor genannten Merkmalen und/oder einem Verfahren mit den zuvor genannten Merkmalen vorgeschlagen.

Darüber hinaus wird eine Sendeantennenanlagen-Überwachungsvorrichtung mit einem Störlichtbogensensor, der einen Rauschanteil eines Frequenzbereichs überwacht, vorgeschlagen. Die Sendeantennenanlagen-Überwachungsvorrichtung weist einen Unterbrecher auf, der eine Trägerschleife der Sendeantennenanlage unterbricht. Im Folgenden wird dieser Unterbrecher auch als Unterbrechungsschalter bezeichnet. Des Weiteren ist eine Steuerung vorgesehen, die in Verbindung mit dem Unterbrecher steht und den Unterbrecher in Abhängigkeit von einem aufgenommenen Rauchsignal auslöst, wobei die Steuerung in Abhängigkeit vom Rauschsignal auswählt zwischen zumindest einer kurzzeitigen Unterbrechung und einer dauerhaften Unterbrechung der Trägerschleife.

Bevorzugt sind der Störlichtbogensensor, der Unterbrecher wie auch die Steuerung auf einer Trägerplatine gemeinsam angeordnet. Dieses erlaubt beispielsweise, dass der Störlichtbogensensor als ein einzelnes Bauteil beispielsweise in einem eigenen Gehäuse an die Sendeantennenanlage angeschlossen werden kann.

Gemäß einer Ausgestaltung ist beispielsweise vorgesehen, dass eine Lichtbogenerkennungsplatine in einem Anbaugehäuse untergebracht ist. Dieses wird beispielsweise direkt mit einem Brückenstecker verbunden. Ein Brückenstecker geht beispielsweise aus der DE 10 2013 014 476 hervor, auf die diesbezüglich vollumfänglich im Rahmen der Offenbarung verwiesen wird. Ein derartiger Brückenstecker weist beispielsweise eine λ/4-Stichleitung auf, über die der Störlichtbogensensor Informationen hinsichtlich eines Rauschspektrums erhält. Der Sensor hat vorzugsweise einen idealen niederohmigen Zugriff auf den Innenleiter des gesamten Antennensystems. Dieses erlaubt, dass ein Lichtbogen, welcher an einer beliebigen Stelle im Antennensystem entstehen kann, erkennbar ist. Vorzugsweise ist auch ein Leistungspfad zwischen Sendeanlage, Filterkette, Maskenfilter bis zum RF-Schaltfeld detektierbar auf Lichtbogen. Durch die Anordnung des Bügelsteckers vor dem RF-Schaltfeld ist somit der gesamte Leistungspfad ab dem RF-Schaltfeld überprüfbar.

Eine Weiterbildung sieht vor, dass die Überprüfung mittels des Störlichtbogensensors permanent erfolgt. Dieses hat den Vorteil, dass auch kurzzeitig auftretendes Rauschen direkt detektiert werden kann und im Rahmen einer Steuerung, ggf. Regelung, dahingehend untersucht werden kann, ob es sich um einen Hinweis auf einen entstandenen Lichtbogen handelt oder aber um ein Rauschen, was beispielsweise durch atmosphärische Störungen in dem Leistungspfad erzeugt worden ist. Der Lichtbogensensor ist dadurch in der Lage, selbst kleinste Funkenbildungen, welche durch Kontakt oder Isolationsprobleme hervorgerufen werden könnten, zu detektieren.

Gemäß einer Ausgestaltung ist vorgesehen, dass der Störlichtbogensensor vorzugsweise einen vorgegebenen Frequenzbereich überwacht. Besonders bevorzugt ist es, wenn dieser vorgebbare Frequenzbereich sich auch ändern lässt. Gemäß einer weiteren Ausgestaltung ist beispielsweise vorgesehen, dass verschiedene Frequenzbereiche überwacht werden. Dieses kann beispielsweise durch eine Vielzahl an jeweils einem Frequenzbereich zugeordneten Störlichtbogensensoren erfolgen. Eine andere Ausgestaltung sieht wiederum vor, dass mehrere Frequenzbereiche einem Störlichtbogensensor zugeordnet sind. Durch ein Springen zwischen diesen verschiedenen Frequenzbereichen und jeweiligem Abtasten derselben kann ebenfalls ein Rauschzustand detektiert werden, der einen Hinweis auf einen Fehler ermöglicht.

Eine Ausgestaltung sieht vor, dass der Störlichtbogensensor stetig den RF-Transportpfad auf Rauschanteile in einem Bereich um 450 kHz erfasst. Detektiert nun der Lichtbogensensor einen abnormalen Rauschanteil im 450-kHz-Fenster, so ist beispielsweise vorgesehen, dass für einen kurzen Zeitraum diese Rauschglocke hinsichtlich ihres Andauerns überwacht wird. Dauert diese Rauschglocke länger an, beispielsweise 3 oder mehr Sekunden, kann vorgesehen sein, dass der Unterbrecher die zugehörige Trägerschleife unterbricht. Dadurch wird die Sendeleistung aller auf dieser Antenne geführten Sender kurzzeitig unterbrochen. Im Anschluss daran wird sofort jedoch wieder die Unterbrechung aufgehoben und die Trägerschleife geschlossen. Sind nach dem kurzzeitigen Ausschalten des oder der Sender die Rauschanteile verschwunden, kann beispielsweise vorgesehen sein, dass hierzu eine Protokollierung erfolgt, die sodann im Rahmen beispielsweise einer regelmäßigen Wartung der Sendeantennenanlage herangezogen wird.

Ist jedoch die kurzzeitige Unterbrechung der Trägerschleife nicht ausreichend und die Rauschanteile bzw. die Rauschglocke entsteht hingegen wieder sofort, kann beispielsweise gemäß einer Ausgestaltung vorgesehen sein, dass sodann die Trägerschleife dauerhaft unterbrochen wird. Eine Ausgestaltung sieht beispielsweise vor, dass mehrfach getestet wird, ob die Rauschglocke wieder sofort nach Öffnen und Schließen der Trägerschleife entsteht. So kann z.B. eine mehrmalige Unterbrechung und Schließung der Trägerschleife vorgesehen sein, wobei nach Erreichen einer einstellbaren Anzahl an Unterbrechungen und Schließungen schließlich nicht mehr eine kurzzeitige, sondern eine dauerhafte Unterbrechung der Trägerschleife erfolgt.

Gemäß einer Ausgestaltung ist beispielsweise vorgesehen, dass sich dieses dreimal in Folge wiederholt, bevor die Trägerschleife dauerhaft geöffnet verbleibt. Bevorzugt ist, dass die dauerhafte Unterbrechung der Trägerschleife nicht durch den Lichtbogensensor bzw. die zugehörige Steuerung selbst wieder aufgehoben werden kann. Vielmehr ist bevorzugt vorgesehen, dass dazu eine andere Betätigung zur Aufhebung der Unterbrechung notwendig wird. Insbesondere ist vorgesehen, dass dieses nur durch ein händisches Zurückstellen vor Ort erfolgen kann.

Hintergrund ist, dass bei einer Vielzahl an wieder auftretendem Entstehen von Rauschen ein tatsächlicher Fehler in der Trägerschleife und vor allem auch eine Lichtbogenentstehung anzunehmen ist. Diese zusätzliche Sicherung verhindert, dass die Sendeantennenanlage größeren Schädigungen unterworfen wird, wie sie beispielsweise durch Brände ausgelöst werden könnten. Der Vorteil dieser zusätzlichen Sicherung in Form eines händischen Resets vor Ort stellt sicher, dass die Anlage erst dann wieder in Betrieb genommen wird, wenn überprüft wurde, an welcher Stelle denn der Lichtbogen überhaupt entstanden ist und eine entsprechende Reparatur ausgeführt wurde.

Andere Sicherungsmöglichkeiten können ebenfalls genutzt werden. Ebenfalls ist es möglich, dass die Wiederinbetriebnahme auch durch andere Aktivierungsmöglichkeiten erfolgen kann. Beispiel kann vorgesehen sein, dass erst ein händisches Freischalten notwendig ist, bevor beispielsweise von einer Fernwarte die Wiederinbetriebnahme ausgelöst werden kann. Auch besteht die Möglichkeit, dass bei einer Anordnung von mehreren Lichtbogensensoren eine Freischaltung ggf. von denjenigen Trägerschleifen ermöglicht wird, die eventuell nicht von einer Lichtbogenbildung betroffen sind. Dieses ist beispielsweise möglich, wenn beispielsweise eine Detektierung desjenigen Abschnittes vorliegt, in dem der Lichtbogen entstanden ist. Eine Detektierung kann beispielsweise durch verschiedene Messmittel an verschiedenen Orten der Trägerschleife erfolgen.

Gemäß einer weiteren Ausgestaltung der Erfindung, die auch unabhängig von der obigen Sendeantennenanlagen-Überwachungsvorrichtung wie auch mit derselben genutzt werden kann, ist eine Sendeantennenanlagen-Überwachungsvorrichtung mit mehreren Überwachungsmodulen zur jeweiligen Überwachung unterschiedlicher elektrischer Parameter der Sendeantennenanlage. Diese Sendeantennenanlagen-Überwachungsvorrichtung ist bevorzugt mit einem ersten Modul mit einer Isolationswiderstandsmessung zur Überwachung einer galvanisch offenen Antennenkonstruktion über eine Gleichstrom-Einspeise-Weiche der Sendeantennenanlage, mit einem zweiten Modul mit einer niederohmigen Schleifenmessung eines Widerstands eines Innenleiters in einem Leistungstransportpfad, und mit einem dritten Modul, das einen Störlichtbogensensor aufweist, vorzugsweise einen Störlichtbogensensor, wie oben beschrieben, versehen. Das erste Modul weist vorzugsweise eine hochohmige Isolationsmessung auf, wie sie beispielsweise aus der oben schon genannten DE 10 2013 014 476 der Anmelderin hervorgeht. Auch diesbezüglich wird vollumfänglich auf den Inhalt dieser Anmeldung im Rahmen der Offenbarung dieser Erfindung verwiesen.

Die Isolationswiderstandsmessung erfolgt vorzugsweise permanent, wobei der Isolationswiderstand von galvanisch offenen Antennenkonstruktionen über eine Gleichstrom-Einspeise-Weiche überwacht wird. Diese Gleichstrom-Einspeise-Weiche geht aus der oben genannten Druckschrift näher hervor. Der Widerstand wird durch eine gleichzeitig erfolgte Strom- und Spannungsmessung ermittelt. Hierfür wird eine stromrichtige Messschaltung genutzt. Die Messergebnisse werden in einem Elektronikbaustein aufbereitet, in einem Anzeigebaustein dekodiert und mittels einer LED-Kette zur Anzeige gebracht. Eine externe Konstantstromquelle versorgt diese Messeinrichtung mit einer Betriebsspannung.

Die Anzeige kann jedoch auch auf andere Weise erfolgen, wobei die LED-Kette die Möglichkeit schafft, verschiedenste Widerstandswerte übersichtlich darzustellen. Diese Widerstandswerte haben beispielsweise eine Größe von 10 kΩ, 100 kΩ, 1 MΩ, 10 MΩ und 100 MΩ. Hierbei hat sich erfahrungsgemäß für diese hochohmige Widerstandsmessung herausgestellt, dass bei Sendeantennenanlagen der genannten Art Messwerte von 10 kΩ und weniger als Alarmschwelle dienen sollten. Daher wird beispielsweise gemäß einer Ausgestaltung vorgesehen, dass bei Erreichen eines Widerstandswertes von 10 kΩ oder weniger dieses genutzt wird, einen potentialfreien Kontakt zur Verfügung zu stellen. Darüber kann sodann bei Erreichen des Messwerts von 10 kΩ und weniger tatsächlich ein Alarm dann auch ausgelöst werden. Die Messwerte in Höhe von 100 kΩ bis 100 MΩ sind hingegen eher von informativem Charakter, können jedoch Aufschluss im Rahmen von länger andauernden Wartungsüberwachungen liefern. Wird daher beispielsweise im Rahmen der LED-Anzeige ein Messwert von 10 kΩ oder weniger ermittelt, leuchtet eine rote LED auf. Wird hingegen ein Messwert von 100 kΩ und mehr erzielt, wird eine grüne LED leuchten. Die Widerstandswerte sowie auch der Grenzwert sind nur beispielhaft angegeben. Es können auch andere Werte zum Einsatz gelangen. Auch können statt diskrete Wertanzeigen konkrete Wertanzeigen der gemessenen Widerstände ermittelt bzw. angezeigt und ggfls. weiterverarbeitet werden.

Das zweite Modul weist vorzugsweise eine niederohmige Widerstandsmessung auf. Diese ist für Sendeantennenanlagen vorgesehen, welche galvanisch geschlossen sind. Das zweite Modul ist ebenso wie das erste Modul vorzugsweise über den Brückenstecker in der Lage, auf das elektrische Antennengebilde zugreifen zu können. Mittels einer niederohmigen Schleifenmessung wird der Widerstand des Innenleiters des Leistungstransportpfades der Sendeantennenanlage zwischen dem Bügelstecker über die gesamte RF-Verrohrung der Speiseleitung und alle verbauten Steckverbindungen bis zu den Verteilern vorzugsweise permanent überwacht. So wie im ersten Modul wird vorzugsweise der Widerstand durch eine gleichzeitige Strom- und Spannungsmessung ermittelt, auf diese Weise wird eine spannungsrichtige physikalische Messung vorgenommen.

Bei einer bevorzugten Ausgestaltung der Erfindung kann vorgesehen sein, dass die zur Widerstandsmessung eingesetzte Spannungsquelle in vorgegebenen Zeitabständen eine Umpolung der angelegten Spannung vornimmt. Dadurch kann vermieden werden, dass eine unipolare Spannung über einen größeren Zeitraum der Messung, d.h. über mehrere Tage, Monate oder Jahre hinweg, eine Ionenwanderung verursachen würde, die folglich zu Materialverfrachtung führen würde. Die Maßnahme der alternierenden Spannung ist bei der erfindungsgemäßen Überwachungsvorrichtung besonders vorteilhaft, da hier eine permanente und auf Dauer angelegte Messung der Sendeantennenanlage erwünscht ist.

Dabei kann vorgesehen sein, dass die Gleichspannung durch ein Rechtecksignal wiedergegeben wird, welche zwischen einem positiven und einem negativen Wert wechselt. Dieser Wechsel kann mit einer niedrigen Frequenz erfolgen, beispielsweise mit einigen wenigen Hz oder auch im mHz-Bereich. Auch kann vorgesehen sein, dass die Umpolung der Spannung jeweils nach einigen Minuten oder Stunden erfolgt. Weiterhin kann vorgesehen sein, dass anstatt einer Gleichspannung eine Wechselspannung zur Messung des Isolationswiderstandes bzw. des Schleifenwiderstandes eingesetzt wird.

Die so gewonnenen Messergebnisse werden wiederum in einem Elektronikbaustein aufbereitet, in einem Anzeigebaustein dekodiert und mittels einer Anzeige zur Kenntnis gebracht. Auch hier kann wiederum eine LED-Kette genutzt werden. Bevorzugt ist beispielsweise, dass eine externe Konstantstromquelle genutzt wird, um die Messeinrichtung des zweiten Moduls mit einer Betriebsspannung zu versehen. Diese niederohmige Widerstandsmessung erlaubt beispielsweise eine Aufteilung einer Anzeige in den folgenden oder ähnlichen Schritten: 50 mΩ, 100 mΩ, 250 mΩ, 500 mQ und 1 Ω. Während die Messwerte von 50 mQ bis 250 mQ jeweils beispielsweise mittels grüner LED angezeigt werden, wird bei Erreichung von 500 mQ bzw. 1 Ω eine rote LED ausgelöst. Wird ein Widerstandswert von 500 mQ und mehr erreicht, wird vorzugsweise auch eine Alarmmeldung ausgeführt.

Eine weitere Ausgestaltung sieht vor, dass das erste, das zweite und das dritte Modul gemeinsam in einem Gehäuse angeordnet sind. Bevorzugt ist dieses Gehäuse wiederum in einem Bügelstecker, wie oben beschrieben, angeordnet.

Auch besteht die Möglichkeit, dass das erste, das zweite und das dritte Modul in einem gemeinsamen Gehäuse untergebracht sind, welches an einem Brückenstecker angeordnet ist. Dieses ermöglicht insbesondere, dass das erste, das zweite und/oder das dritte Modul jeweils die in dem Brückenstecker enthaltenen Komponenten, wie beispielsweise eine λ/4-Stichleitung, nutzen können. Auch kann beispielsweise im Brückenstecker eine Konstantstromquelle vorgesehen sein, die in der Lage ist, zumindest das erste und das zweite Modul mit einer ausreichenden Betriebsspannung versorgen zu können.

Gemäß einer weiteren Ausgestaltung ist vorgesehen, dass das erste und das zweite Modul jeweils mit einer Anzeige verbunden sind, wobei der Anzeige ein Signal zugeführt wird, welches einen gemessenen Widerstandswert charakterisiert. Die Nutzung von getrennten Anzeigen, die bevorzugt am Gehäuse angeordnet sind, in denen sich das erste und das zweite Modul befinden, erlaubt, dass die Sendeantennenanlagen-Überwachungsvorrichtung, insbesondere auch transportabel sein kann. Dieses kann beispielsweise durch Anordnung an dem Brückenstecker erfolgen. Sie kann aber auch an einem anderen Ort der Sendeantennenanlage angeordnet werden, je nachdem, wo eine Schnittstelle vorgesehen ist oder eingerichtet werden kann, die es ermöglicht, dass die verschiedenen Module ihre jeweiligen Überwachungsaufgaben wahrnehmen können.

Des Weiteren ist beispielsweise vorgesehen, dass das erste und das zweite Modul jeweils einen separaten Schwellwert hinsichtlich eines aufgenommenen Messwerts aufweisen, wobei mit dem jeweiligen Schwellwert eine Alarmierungsfunktion verbunden ist. Der Schwellwert wird vorzugsweise je nach Sendeantennenanlage eingestellt, die zu überwachen ist. Auch kann dieser Schwellwert beispielsweise je nach Antenne, die zu überprüfen ist, eingestellt werden. Dieses erlaubt beispielsweise, dass gleich oder gleichartige Sendeantennenanlagen-Überwachungsvorrichtungen in einer Grundausstattung hergestellt werden und sodann an die jeweilige Sendeantennenanlage angepasst, mit entsprechenden dort vorhandenen Parametern abgeglichen und eingestellt werden. So können auch mehrere Sendeantennenanlagen-Überwachungsvorrichtungen in einem Funkmast bzw. Sendeturm genutzt werden, die jeweils überlappend, aber auch getrennt voneinander verschiedene Leistungspfade oder Abschnitte davon überwachen können.

Gemäß einer Weiterbildung ist vorgesehen, dass das erste und das zweite Modul über einen gemeinsamen Umschalter verfügen, mittels dessen zwischen dem ersten und dem zweiten Modul umgeschaltet werden kann. Der Umschalter ist beispielsweise mit dem Anzeigefeld, der LED-Kette oder einer sonstigen Anzeige verbunden. Auf diese Weise wird einem Nutzer ermöglicht, dass er verschiedene Module in Anzeige bringen kann. Der Umschalter kann händisch betätigt werden. Es besteht aber auch die Möglichkeit, dass ein Umschalter durch sonstige Betätigungsweisen ausgelöst werden kann. Bevorzugt ist hierbei, dass die Anzeige zusammen mit den Modulen in oder an einem Gehäuse untergebracht ist. Des Weiteren kann ein Umschalter vorgesehen sein, sofern zwischen verschiedenen Modulen bzw. Messungen umgeschaltet werden soll.

Gemäß einer weiteren Ausgestaltung ist insbesondere in Bezug auf den Störlichtbogensensor vorgesehen, dass dieser eine IP-Schnittstelle zur Kommunikation besitzt sowie vorzugsweise ebenfalls einen potentialfreien Kontakt, über welchen die heiße Trägerschleife des oder der angeschlossenen Sender geöffnet werden können.

Gemäß einer weiteren Ausgestaltung können auch eins oder mehrere der Module jeweils zumindest über eine IP-Adresse verfügen, wobei eine IP-Schnittstelle am Gehäuse vorgesehen ist. Die jeweiligen Module können sodann mit dieser IP-Schnittstelle verbunden sein.

Eine weitere Ausgestaltung sieht vor, dass der Platine, auf der der Störlichtbogensensor angeordnet ist, Administratorrechte zugeordnet werden können. Über den Zugriff über eine feste IP-Adresse kann sodann ein Administrator auf beispielsweise den Störlichtbogensensor bzw. auf die dortige Schaltuhr der Steuerung zugreifen, um Änderungen vorzunehmen. Dieses können beispielsweise Änderungen hinsichtlich der Zeitdauer, der kurzfristigen Unterbrechung, der Wiederholung dieser kurzfristigen Unterbrechung wie auch beispielsweise des zu überwachenden Frequenzbandes sein.

Die Nutzung der drei oben vorgestellten verschiedenen Module erlaubt es insbesondere, dass unterschiedliche Schadensereignisse mit einer einzigen Messvorrichtung festgestellt werden können, während die Isolationsmessung bzw. die niederohmige Messung vor allem der Betriebssicherheit in Bezug auf schleichende Vorgänge an der Sendeantennenanlage dienen, so z.B. dem Entdecken eines verschmorten Steckers, die Lichtbogendetektierung dazu, größere Schadensereignisse abwenden zu können, insbesondere Brände von Antennenanlagen.

Eine weitere Nutzung der vorgeschlagenen Sendeantennenanlagen-Überwachungsvorrichtung ist, eine Qualitätsbeurteilung der Sendeantennenanlage vornehmen zu können. Wird beispielsweise eine Erstmessung bei Inbetriebnahme der Sendeantennenanlage vorgenommen, können auf diese Weise derartige DAB-, UKW- bzw. DVBT-Sendeantennenanlagen hinsichtlich ihrer Parameter zu Beginn festgehalten werden. Kommt es sodann im Betrieb der jeweiligen Sendeantenne zu Änderungen, insbesondere zu schleichenden Schädigungen, kann dieses über die verschiedenen Module detektiert werden. So kann insbesondere eine langsam voranschreitende Widerstandsänderung, aufgenommen durch das erste bzw. zweite Modul, eine Aussage liefern, wie gegebenenfalls, insbesondere auch wo ggf. Revisionen an der Sendeantennenanlage zukünftig anstehen könnten. Dieses erlaubt beispielsweise, Revisionszeiträume besser planen zu können, um zu verhindern, dass Schädigungen auftreten, die bei einer vorherigen, d.h. früheren Revision, hätten vermieden werden können.

Bevorzugt ist es daher, dass die vorgeschlagene Sendeantennenanlagen-Überwachungsvorrichtung zwar portabel, aber permanent an der Sendeantennenanlage angeordnet ist. Dieses erlaubt eine stete Überwachung der verschiedenen elektrischen Parameter.

Gemäß einer weiteren Ausgestaltung der Erfindung wird ein Verfahren zur Überwachung einer Sendeantennenanlage mittels zumindest eines Störlichtbogensensors vorgeschlagen. Hierbei kann insbesondere eine Sendeantennenanlage-Überwachungsvorrichtung genutzt werden, wie sie oben schon beschrieben ist. Der Störlichtbogensensor überwacht entsprechend des vorgeschlagenen Verfahrens eine Trägerschleife der Sendeantennenanlage, wobei bei Detektierung eines Rauschanteils die Trägerschleife zumindest einmal kurzzeitig unterbrochen wird, anschließend die Trägerschleife wieder geschlossen wird, sofern das Rauschsignal nach dem zumindest einmaligen Öffnen und Schließen der Trägerschleife weiterhin detektiert wird, die Trägerschleife schließlich dauerhaft unterbrochen wird.
Eine Weiterbildung des Verfahrens sieht vor, dass bei einer dauerhaften Unterbrechung der Trägerschleife durch den Störlichtbogensensor ein Störsignal ausgelöst wird, welches zu einer Fernwarte entfernt von der Sendeantennenanlage weitergeleitet wird. Hierzu kann beispielsweise die oben vorgestellte IP-Schnittstelle genutzt werden. Dieses erlaubt, an einer einzigen Fernwarte eine Vielzahl über ein sehr großes Gebiet verteilter Sendeantennenanlagen gleichzeitig überwachen zu können. Insbesondere erlaubt dieses auch eine automatisierte Überwachung, bei der erst dann ein tatsächlicher Schadensvorfall oder ein Schwellwert vor Beginn eines Schadensvorfalles an die Bedienmannschaft ausgelöst wird, wenn durch eines der Module bzw. durch den Störlichtbogensensor das ermittelt und weitergeleitet wurde.

Weitere vorteilhafte Ausgestaltungen und Merkmale der Erfindung gehen aus den nachfolgenden Figuren hervor. Die aus den jeweiligen Figuren hervorgehenden jeweiligen Merkmale sind jedoch nicht auf die jeweilige Ausgestaltung beschränkt. Vielmehr können eines oder mehrere Merkmale aus einer oder mehreren Ausgestaltungen mit weiteren Merkmalen aus anderen Figuren wie auch aus der obigen Beschreibung zu zusätzlichen Ausgestaltungen verknüpft werden. Insbesondere sind die aus den Figuren hervorgehenden Einzelheiten nur beispielhaft zu verstehen, ohne aber den Erfindungsgedanken zu beschränken.

Es zeigen:
- Fig. 1: eine beispielhafte Ansicht eines Lichtbogenspektrums im Frequenzbereich bis 3GHz,
- Fig. 2: ein Spektrum eines Lichtbogens,
- Fig. 3: ein Blockschaltbild einer Lichtbogenerkennung in schematischer Ansicht,
- Fig. 4: eine stromrichtige Messung,
- Fig. 5: ein Blockschaltbild einer spannungsrichtigen Messung,
- Fig. 6: eine beispielhafte Widerstandsmessschaltung für eine Isolationsmessung zur Anwendung im ersten Modul und
- Fig. 7: eine beispielhafte Anordnung eines Gehäuses mit integriertem erstem, zweitem und drittem Modul an einem Bügelstecker.

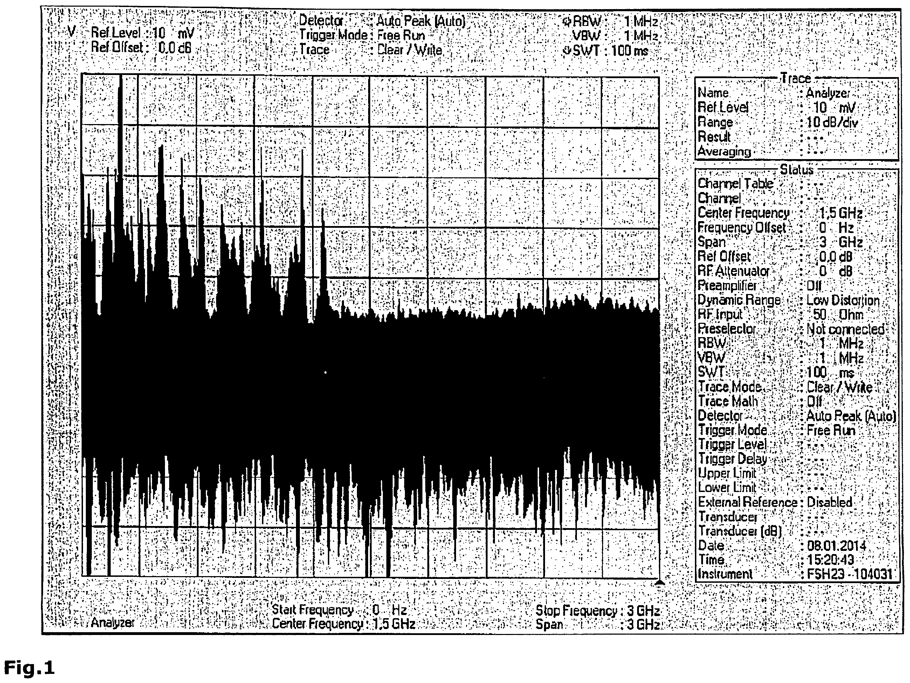

Fig. 1 zeigt in beispielhafter Ausgestaltung einen sogenannten "Störnebel", wie er sich bei einem erzeugten Lichtbogen einstellt. Dargestellt ist ein Lichtbogenspektrum, welches mit einem Lichtbogendemonstrator aufgenommen wurde, angewendet auf einen UKW-Testfall mit 100 MHz und 600 W. Der Störnebel ergab sich mit einem Messgerät Rohde & Schwarz FSH 3, welches zwischen 10 und 20 mV bei einer Dämpfung von 10 dB im Eingang hatte. Wie aus dem Bild hervorgeht, wird durch den Lichtbogen ein Störnebel erzeugt, der vom NF-Bereich bis etwa 1,5 GHz reicht. Wird eine derartige Störnebelglocke detektiert, ist der Störlichtbogensensor in der Lage, diesen festgestellten Rauschanteil dahingehend zu interpretieren, dass der Unterbrecher die Leistung in der Trägerschleife unterbricht.

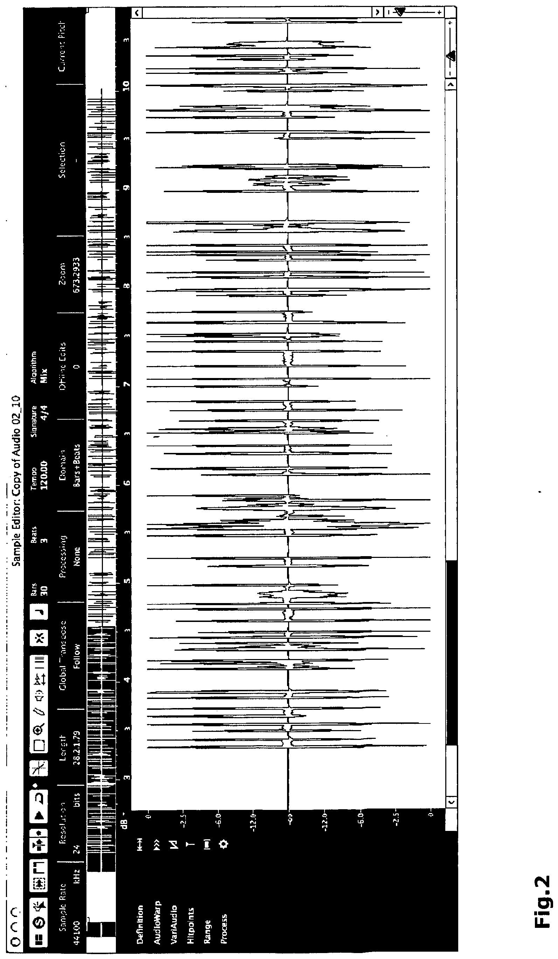

Fig. 2 zeigt eine beispielhafte Ansicht eines Verdampfungsprozesses im für das menschliche Ohr hörbaren niederfrequenten Frequenzbereich, diese Aufnahme zeigt einen reellen Zersetzungsprozess von ca. 2cl Wasser in der Verkabelung einer Sendeantennenanlage betrieben mit einer Radiofrequenten Leistung von ca. 500 W bei einer Betriebsfrequenz von 100MHz. Das aufgenommene Spektrum zeigt die Charakteristika eines durch Eindringen von Nässe verursachten Störlichtbogens. Wie in der Figur 2 zu erkennen ist, ist Störlichtbogensignal im niederfrequenten, hörbaren Bereich deutlich zu erkennen. Insbesondere im Frequenzbereich von 0 Hz bis 15 kHz ist das Störsignal gut zu detektieren. Die Auswertung des chaotischen Störsignals kann wie zuvor beschrieben erfolgen. Insbesondere kann dabei als Messwert ein Intensitätswert des Messsignals, der bei einer bestimmten Frequenz aufgenommen wurde, mit einem Schwellwert verglichen werden. Beispielsweise kann der Messwert, der bei einer Frequenz von 19 kHz aufgenommen wurde, mit einem Schwellwert verglichen werden. Liegt dieser Messwert oberhalb des Schwellwerts, so wird ein Störsignal angenommen. Auch kann beispielsweise ein Frequenzbereich, wie z.B. der Bereich zwischen 0 kHz und 5 kHz oder zwischen 0 kHz und 4 kHz ausgewertet werden. Dabei kann etwa ein Mittelwert des Messsignals innerhalb dieses Frequenzbereichs mit einem vorgegebenen Schwellwert verglichen werden.

Die Detektion von Störlichtbögen nach der beschriebenen Methode erfolgt insbesondere auch schon im Frühstadium von Schäden, sodass noch die Möglichkeit besteht, eine Reparatur der Sendeantennenanlage vorzunehmen, bevor ein irreparabler Schaden eingetreten ist. Auch leichte Überschläge sind mit der erfindungsgemäßen Überwachungsvorrichtung zu detektieren.

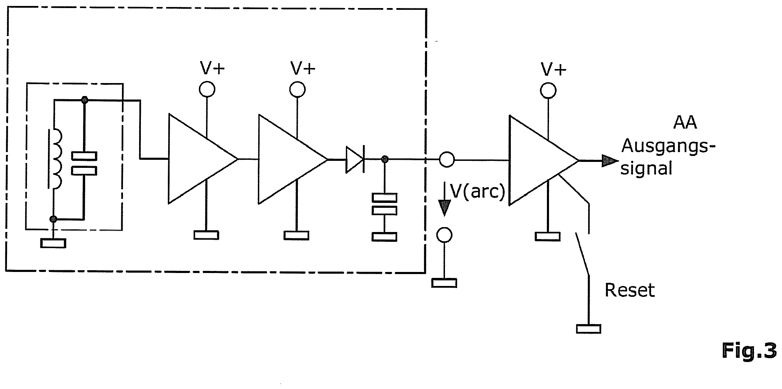

Fig. 3 zeigt in schematischer Ansicht ein Blockschaltbild einer möglichen Lichtbogenerkennung, wie es in der nachfolgenden Druckschrift näher erläutert wird. Lichtbogensensoren sind im Stand der Technik bekannt. So gehen beispielsweise aus der WO 2014/032650 A1 ein Verfahren und eine Vorrichtung zur Lichtbogenerkennung hervor. Dieses wie auch das daraus hervorgehende Blockschaltbild können genutzt werden, um einen Lichtbogensensor entsprechend vorzusehen. Auf den diesbezüglichen Inhalt dieser Druckschrift wird im Umfang der Offenbarung Bezug genommen. Daneben können aber auch andere Lichtbogensensoren genutzt werden. Zum Beispiel gibt es im Bereich der Solartechnik bei Photovoltaikanlagen mittlerweile Lichtbogenerkennungen, die im Wechselrichter angeordnet sind. Diese sind auf einer Platine untergebracht und erlauben die Überwachung von dortigen Solarzellen. Derartige Platinen können jedoch auch für Sendeantennenanlagen genutzt werden, um Störlichtbögen zu detektieren, wie sie beispielsweise bei beschädigten Anschlussklemmen, korrodierten Kabeln, verschlissenen Isolierungen oder bei sonstigen Schadensereignissen im Bereich der Sendeantennenanlage auftreten können. Neben der Detektierung eines Rauschens durch einen erzeugten Lichtbogen besteht die Möglichkeit, dass eine Detektierung eines Lichtbogens auch auf andere Art und Weise erfolgt. Dieses kann beispielsweise durch Verfahren erfolgen, wie sie beispielsweise aus der DE 10155796 B4, der DE 102004051734 A1, der WO2010/072717 A1, der WO 95/25374, der DE 102004056436 A1, der US 5,185,687, der US 6,683,766, der DE 69231066 T2 oder auch der EP 2040348 A2 grundsätzlich hervorgehen, wobei diesbezüglich im Rahmen der Offenbarung Bezug genommen wird auf diese Dokumente. Für die Sendeantennenanlage hat sich jedoch besonders vorteilhaft die Überwachung dahingehend dargestellt, dass anhand eines Rauschens auf den Lichtbogen geschlossen werden kann und somit auch der gesamte Leistungspfad überwachbar ist.

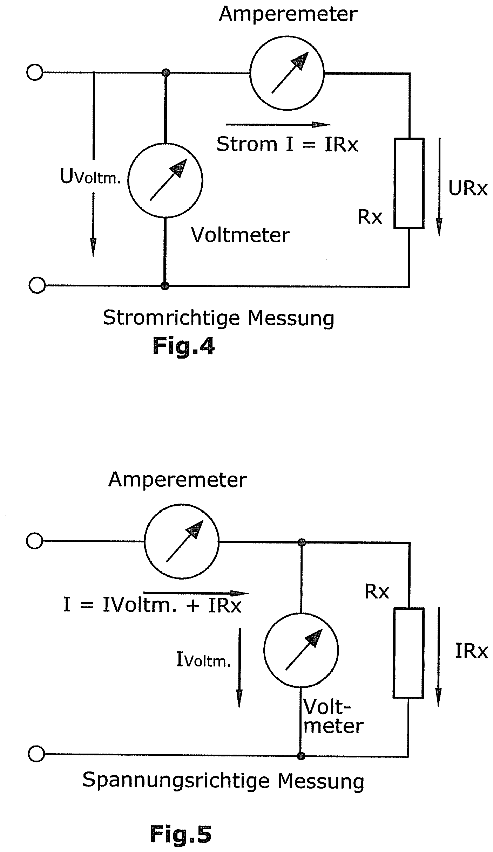

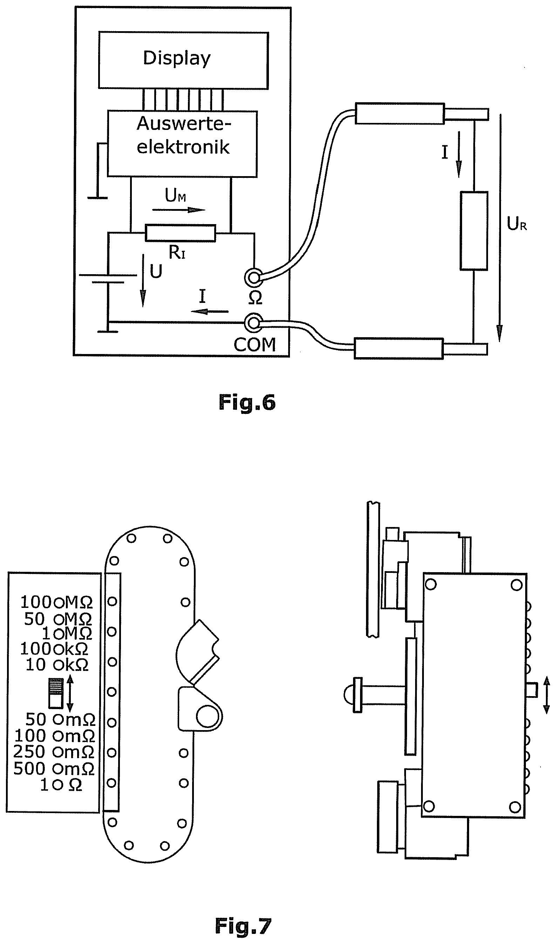

Fig. 4 wiederum zeigt eine stromrichtige Messung in einem beispielhaften Schaltbild, während Fig. 5 eine spannungsrichtige Messung des Widerstandes zeigt. Im ersten wie auch im zweiten Modul werden beide Möglichkeiten zur Anwendung gebracht, wobei aus Fig. 6 eine beispielhafte Ausgestaltung der Widerstandsmessschaltung für das erste Modul hervorgeht.

Fig. 7 zeigt in schematischer Ansicht einen Bügelstecker, wie er oben schon näher besprochen wurde, anhand der von der Anmelderin eingereichten Patentanmeldung. An diesem Bügelstecker und an den dortigen Vorrichtungen kann ein Gehäuse zur Unterbringung der Widerstands-Messeinrichtung, das Anzeigeelektronik wie auch des Störlichtbogensensors vorgesehen sein. So wie dargestellt, kann beispielsweise eine erste LED-Kette vorgesehen sein, die hochohmige Messwerte anzeigt, während eine zweite LED-Kette niederohmige Messwerte anzeigt. Mit dem dort dargestellten Umschalter besteht die Möglichkeit zwischen einer niederohmigen und einer hochohmigen Messung umschalten zu können. Durch Anbau eines derartigen Modulgehäuses an den Bügelstecker können somit deren Funktionalitäten miteinander verknüpft werden, ohne dass es zusätzlicher Bauteile bedarf.

Die zu überwachende Sendeantennenanlage weist wenigstens einen Leistungstransportpfad zur Leistungszufuhr zu wenigstens einer ersten Sendeantenne sowie wenigstens eine Widerstandsmesseinrichtung zur Bestimmung eines ohmschen Widerstands auf zur Überwachung der Sendeantennenanlage.

Die Widerstandsmesseinrichtung umfasst wenigstens eine Gleichspannungsquelle zur Beaufschlagung wenigstens des Abschnitts des Leistungstransportpfads mit einer Messgleichspannung. Des Weiteren weist die Widerstandsmesseinrichtung wenigstens ein Messgerät zur Bestimmung des Widerstands des Abschnitts auf, der mit der Messgleichspannung beaufschlagt ist.

In einer besonders bevorzugten Ausgestaltung kann die vorgeschlagene Überwachung bei Sendeleistungen bis zu 50 kW, vorzugsweise von vorzugsweise 2 kW bis 50 kW funktionsfähig genutzt werden.

Bei einem Messgerät zur Bestimmung des Widerstands kann es sich um ein Ohmmeter handeln, es kann jedoch ebenfalls zusätzlich oder alternativ beispielsweise vorgesehen sein, dass ein Messgerät vorgesehen ist, welches eine indirekte Bestimmung eines Widerstands vorsieht. So kann zum Beispiel eine Redundanzmessung vorgesehen sein, beispielsweise zum Abgleich und/oder zum Gegenprüfen, Beispielsweise kann eine indirekte Bestimmung über eine Ermittlung eines elektrischen Stroms und/oder einer elektrischen Spannung vorgesehen sein.

In einer Ausgestaltung der Sendeantennenanlage kann beispielsweise vorgesehen sein, dass die Widerstandsmesseinrichtung in einem elektrischen Speiseleitungsbereich des Leistungstransportpfads angeordnet ist.

Der Speiseleitungsbereich des Leistungstransportpfad bezeichnet einen Bereich der Sendeantennenanlage, welcher vorzugsweise als ein HF-Kabel oder als ein HF-Kabelbündel ausgebildet ist, welches zu der ersten Sendeantenne in führt. In einer bevorzugten Ausgestaltung der Sendeantennenanlage kann beispielsweise vorgesehen sein, dass die Widerstandsmesseinrichtung an bzw. in einem HF-Kabel oder an bzw. in einem Verrohrungsabschnitt des Leistungstransportpfads angeordnet ist.

Ein Vorteil einer Anordnung der Widerstandsmesseinrichtung an bzw. in einem HF-Kabel oder an bzw. in einem Verrohrungsabschnitt des Leistungstransportpfads ist beispielsweise, dass durch die unmittelbare Anordnung an die bereits bestehende Infrastruktur der Sendeantennenanlage ein kostengünstiges Anbringen der Widerstandsmesseinrichtung möglich ist, während diese gleichzeitig effizient funktioniert und flexibel positioniert werden kann. So kann eine Widerstandsmesseinrichtung zum Beispiel versetzbar angeordnet werden. Eine weitere Ausgestaltung sieht beispielswiese vor, dass die Widerstandsmesseirichtung nicht permanent eingebaut ist. Vielmehr kann gemäß einer Ausgestaltung diese vollständig oder zumindest teilweise nur zeitweise ein- bzw. angeordnet im Leistungstransportpfad angeordnet sein. So kann zum Beispiel mittels einer transportablen Überprüfungseinrichtung eine Überprüfung des Leistungstransportpfades erfolgen bzw. eine Überprüfung der permanent eingebauten Überwachung des Leistungstransportpfads gemäß des hier beschriebenen Systems erfolgen.

In einer bevorzugten Ausgestaltung der Sendeantennenanlage kann beispielsweise vorgesehen sein, dass die Widerstandsmesseinrichtung an einem Speiseleitungsbeginn angeordnet ist.

Eine Anordnung der Widerstandsmesseinrichtung an einem Speiseleitungsbeginn hat insbesondere den Vorteil zur Folge, eine vollständige Überwachung der jenseits des Speiseleitungsbeginns befindlichen Infrastruktur gegen Veränderung des Widerstands ermöglichen zu können. So wird insbesondere eine vollständige Überwachung des Leistungstransportpfads sowie der Sendeantenne gegen Veränderung des Widerstands ermöglicht.

In einer Ausgestaltung der Sendeantennenanlage kann beispielsweise vorgesehen sein, dass die Widerstandsmesseinrichtung in einem bestückbaren Schaltfeld des Speiseleitungsbeginns angeordnet ist.

Ein Einbringen der Widerstandsmesseinrichtung in einem bestückbaren Schaltfeld des Speiseleitungsbeginns hat den Vorteil zur Folge, dass das eine flexible Bestückung der Sendeantennenanlage möglich ist.

Des Weiteren hat ein Einbringen der Widerstandsmesseinrichtung in einem bestückbaren Schaltfeld des Speiseleitungsbeginn den Vorteil, dass bereits zur Verfügung stehende, zum Einbringen in das Schaltfeld vorgesehene Bauteile mit der integrierten Widerstandsmesseinrichtung dahingehend modifiziert und genutzt werden können, dass die vorhandene Infrastruktur ansonsten weitgehend unverändert genutzt werden kann.

Gleichzeitig ergibt sich hierdurch der Vorteil, dass am Speiseleitungsbeginn des Leistungstransportpfads der Sendeantennenanlage die Widerstandsmesseinrichtung positioniert ist, was aus den eingangs genannten Gründen vorteilhaft ist. Ein weiterer Vorteil ist, dass die in der Sendetechnik üblichen Schaltfelder verwendet werden können, welche zu Beginn einer jeden Speiseleitung in Richtung zu den Sendeantennenanlage installiert sind. Derartige Schaltfelder sind in vielen Fällen mit so genannten Bügelsteckern bestückt.

Hierbei kann auch beispielsweise vorgesehen sein, dass mehr als ein Bügelstecker in paralleler Anordnung genutzt werden.

Bei der in Rundfunksendeantennenanlagen oftmals verwendeten Nutzung zweier Halbantennen für ein gleiches Frequenzspektrum kann vorgesehen sein, für jede der Halbantennen eine eigens vorgesehene Widerstandsmesseinrichtung und/oder ein eigens vorgesehenes Gleichstromeinspeiseglied zu verwenden.

Gleichzeitig kann vorgesehen sein, dass die Widerstandsmesseinrichtung vollständig oder teilweise in einem Bügelstecker eingebaut ist, der zumindest ein Gleichstromeinspeiseglied aufweist.

In einer Ausgestaltung der Sendeantennenanlage kann beispielsweise vorgesehen sein, dass die Widerstandsmesseinrichtung ein Gleichstromeinspeiseglied aufweist.

In einer Ausgestaltung der Sendeantennenanlage, in welcher die Widerstandsmesseinrichtungen ein Gleichstromeinspeiseglied aufweist, kann der Leistungstransportpfad der Sendeantennenanlage, welcher während des Betriebs für den Transport von Hochfrequenzleistungen vorgesehen ist, mit einem Gleichstrom beaufschlagt werden.

In einer Ausbildung der Sendeantennenanlage kann beispielsweise vorgesehen sein, dass das Gleichstromeinspeiseglied ein erstes Kontaktelement und ein zweites Kontaktelement aufweist. Es kann des Weiteren vorgesehen sein, dass das erste Kontaktelement und das zweite Kontaktelement beispielsweise mittels wenigstens eines Kondensators kapazitiv gekoppelt sind.

Bei einer Anordnung des Gleichstromeinspeiseglieds zwischen der Sendeanlage und dem Leistungstransportpfad bewirkt die kapazitive Kopplung, dass die zu transportierende HF-Leistung weiterhin zwischen Sendeanlage und Leistungstransportpfad passieren kann, der Pfad für einen Gleichstrom jedoch aufgrund der kapazitiver Kopplung gesperrt ist.

In einer Ausgestaltung der Sendeantennenanlage kann beispielsweise vorgesehen sein, dass von einer ersten Verbindungsleitung des ersten Kontaktelements mit dem zweiten Kontaktelement ausgehend eine zu einem dritten Kontaktelement hinführende zweite Verbindungsleitung angeordnet ist.

In einer bevorzugten Ausgestaltung der Sendeantennenanlage ist die zweite Verbindungsleitung von einer Seite der ersten Verbindungsleitung ausgehend, welche der Leistungstransportpfadseite des Kondensators zugewandt ist. Hierdurch wird eine Möglichkeit einer Verbindung des Leistungstransportpfads zu einem Ende der zweiten Verbindungsleitung geschaffen, wohingegen eine Verbindung eines Endes der zweiten Verbindungsleitung mit der Sendeanlage über einen Gleichstrom durch die kapazitive Kopplung des ersten Kontaktelements unterbunden ist.

In einer Ausgestaltung der Sendeantennenanlage kann beispielsweise vorgesehen sein, dass die zweite Verbindungsleitung wenigstens ein Kopplungsglied des Gleichstromeinspeiseglieds aufweist zur Verbindung des zweiten Kontaktelements mit dem dritten Kontaktelement. Es kann bevorzugt vorgesehen sein, dass das Kopplungsglied als λ/4-Stichleitungs-Anpassung an die Sendeantenne oder als L-C-Parallelschwingkreis ausgebildet ist.

Es kann in einer anderen Ausgestaltung auch vorgesehen sein, dass das Kopplungsglied als Drossel ausgebildet ist.

Vorteil eines Einbringens eines Kopplungsglieds, welches als λ/4-Stichleitungs-Anpassung, als L-C-Parallelschwingkreis oder als Drossel ausgebildet ist, ist unter anderem eine mittels destruktiver Interferenz der zum Leistungstransportpfad führenden Wechselspannung erfolgende Dämpfung in Richtung des Messgerätes und/oder der Gleichspannungsquelle, so dass diese von den Wechselspannung leitenden Bauteilen der Sendeantennenanlage getrennt sind.

Die Auslegung des Kopplungsglieds bei einer Bandbreite eines von der Sendeantenne emittierten Frequenzbereichs wird beispielweise dahingehend vorgenommen, dass das Kopplungsglied eine Frequenz etwa in der Mitte des Frequenzbereichs filtert. So kann beispielsweise bei einer Ausgestaltung eines Kopplungsglieds als λ/4-Stichleitungs-Anpassung vorgesehen sein, dass bei dem Beispiel einer UKW-Sendeantennenanlage, welche Signale aus einem Frequenzbereich von 87-108 MHz emittiert, eine mittlere Frequenz von f = (87+108) MHz/2 = 97,5 MHz zu Grunde gelegt wird. Aus einer mittleren Frequenz von 97,5 MHz ergibt sich aus der Formel λ = c/f mit den genannten Größen ein Wert von A = 3,07 m. In der Formel λ = c/f ist c die Lichtgeschwindigkeit und f die oben genannte Frequenz. Unter Nutzung des ermittelten Werts ergibt sich für die λ/4-Stichleitungs-Anpassung eine notwendige Länge der λ/4-Stichleitungs von 3,07 m/4 = 0,77 m. Bei der Auslegung einer λ/4-Stichleitungs-Anpassung anhand eines Mittelwerts eines Frequenzbereichs haben sich in einem Feldversuch ein Rückflussdämpfungswert von > 21 dB und eine vernachlässigbar kleine Durchgangsdämpfung gezeigt, so dass die bestimmungsgemäße Funktion des Gleichstromeinspeiseglieds in Kombination mit einer Isolationsmesseinrichtung gewährleistet war. Gleichzeitig wurden die Übertragungsparameter der emittierten Signale nicht nachweisbar beeinflusst, wodurch die Funktionsfähigkeit der beschriebenen Versuchsanordnung belegt ist.

In einer Ausgestaltung der Sendeantennenanlage kann beispielsweise vorgesehen sein, dass die zweite Verbindungsleitung einen zwischen dem Kopplungsglied und dem dritten Kontaktelement angeordneten Übergangskondensator des Gleichstromeinspeiseglieds aufweist.

In einer weiteren Ausgestaltung der Sendeantennenanlage kann vorgesehen sein, dass zwischen dem Kopplungsglied und dem dritten Kontaktelement ein HF-neutraler Raum des Gleichstromeinspeiseglieds angeordnet ist, der bevorzugt einen Gasentladungs-Überspannungsableiter aufweist.

In einer weiteren Ausgestaltung der Sendeantennenanlage kann vorgesehen sein, dass die Widerstandsmesseinrichtung ein mit der Anlage verbundenes, bevorzugt austauschbares und/oder steckbares, Einbauteil aufweist, das zumindest das Gleichstromeinspeiseglied enthält.

Der Vorteil sowohl des Übergangs-Kondensators und/oder des Gasentladungsüberspannungsableiters ist, dass eine Zerstörung einzelner Bauteile durch spontane Spannungserhöhung, beispielsweise durch direkten oder indirekten folgenden Blitzschlag, weitgehend vermieden wird.

In einer weiteren Ausgestaltung der Sendeantennenanlage kann beispielsweise vorgesehen sein, dass zumindest ein Kontaktelement der Widerstandsmesseinrichtung, bevorzugt alle Kontaktelemente, als Steckbuchse ausgebildet sind, wobei:
- eine erste Steckbuchse mit der Sendeanlage verbunden ist,
- eine zweite Steckbuchse mit dem Leistungstransportpfad verbunden ist und
- eine dritte Steckbuchse, die bevorzugt mit einer Abschirmung versehen ist, zum Schutz vor einem Kontakt mit Gegenständen oder Lebewesen, zumindest mit der Gleichspannungsquelle verbunden ist.
Bevorzugt weist die Isolationsmesseinrichtung die Gleichspannungsquelle und das Messgerät zur Bestimmung des Widerstands auf. In Verbindung mit wenigstens dem Gleichstromeinspeiseglied bildet die Steckverbindung des Gleichstromeinspeiseglieds mit der Isolationsmesseinrichtung beispielsweise die Widerstandsmesseinrichtung.
Ebenfalls kann auch vorgesehen sein, dass anstelle einer, beispielsweise kompakt ausgebildeten, Isolationsmesseinrichtung eine Kombination wenigstens einer Gleichstromquelle und wenigstens eines Messgerätes an der dritten Steckbuchse angeordnet ist.
Ebenfalls kann auch vorgesehen sein, dass die Widerstandsmesseinrichtung gebildet wird, in dem mehr als eine Gleichstromquelle und mehr als ein Messgerät an der dritten Steckbuchse angeordnet sind.

Ebenfalls sind auch Ausgestaltungen möglich, in welcher das Gleichstromeinspeiseglied, die Gleichstromquelle und/oder das Messgerät in einem kompakten Bauteil angeordnet sind.

Eine Verbindung mit der ersten Steckbuchse, mit der zweiten Steckbuchse und/oder der dritten Steckbuchse kann revisibel lösbar sein, was insbesondere den Vorteil hat, dass die Widerstandsmesseinrichtung oder Bestandteile der Widerstandsmesseinrichtung austauschbar sind.

In einer weiteren Ausgestaltung kann beispielsweise vorgesehen sein, dass das Gleichstromeinspeiseglied als ein kompaktes Bauteil vorgesehen ist, und dass das Gleichstromeinspeiseglied als austauschbares Einbauteil vorliegt.

Ebenfalls kann beispielsweise vorgesehen sein, dass eine Verbindung der dritten Steckbuchse mit der Gleichstromquelle und/oder dem Messgerät oder aber eine Verbindung der dritten Steckbuchse mit der Isolationsmesseinrichtung als nicht zerstörungsfrei lösbar ausgeführt ist, beispielsweise als Schweißverbindung.

Es kann beispielsweise eine Messgleichspannung mit einem Wert zwischen 48V und 500 V vorgesehen sein.

Bevorzugt kann eine Messgleichspannung mit einem Wert von 48V vorgesehen sein. Auch können unterschiedliche Messgleichspannungen zum Einsatz kommen, die vorzugsweise innerhalb des angegebenen Bereichs liegen.

In einer weiteren Ausgestaltung der Sendeantennenanlage kann beispielsweise vorgesehen sein, dass die Sendeantennenanlage eine Funkantennenanlage ist. Ein weiterer Gedanke der Erfindung, der abhängig wie auch unabhängig von der oben beschriebenen Sendeantennenanlage angewendet werden kann, betrifft ein Einbauteil.

Es ist ein Einbauteil mit zumindest einer Einkopplung einer Widerstandsmesseinrichtung in einen Leistungstransportpfad einer Sendeantennenanlage mit einer Sendeleistung von wenigstens 2 kW vorgesehen, wobei das Einbauteil wenigstens ein Gleichstromeinspeiseglied aufweist, das umfasst:
- ein bevorzugt als erste Steckbuchse ausgebildetes erstes Kontaktelement zum, bevorzugt senderseitigen, Verbinden,
- ein bevorzugt als zweite Steckbuchse ausgebildetes zweites Kontaktelement zum, bevorzugt leistungstransportseitigen, Verbinden und
- ein bevorzugt als dritte Steckbuchse ausgebildetes drittes Kontaktelement zum Verbinden mit der Widerstandsmesseinrichtung.
Die Widerstandsmesseinrichtung weist bevorzugt eine Isolationsmesseinrichtung auf.

Es kann des Weiteren beispielsweise ein Einbauteil vorgesehen sein, dessen erstes Kontaktelement und zweites Kontaktelement mittels wenigstens eines Kondensators des Gleichstromeinspeiseglieds kapazitiv gekoppelt sind.
In einer Ausgestaltung des Einbauteils kann beispielsweise vorgesehen sein, dass von einer ersten Verbindungsleitung des Gleichstromeinspeiseglieds zwischen dem ersten Kontaktelement und dem zweiten Kontaktelement ausgehend, bevorzugt leistungstransportseitig des Kondensators orientiert, eine zu dem dritten Kontaktelement hinführende zweite Verbindungsleitung des Gleichstromeinspeiseglieds angeordnet ist.

In einer weiteren Ausbildung des Einbauteils kann ein Kopplungsglied vorgesehen sein, dass als Teil der zweiten Verbindungsleitung vorgesehen ist. Das Kopplungsglied ist bevorzugt als λ/4-Stichleitungs-Anpassung an die Sendeantenne und/oder als L-C-Parallelschwingkreis ausgebildet.

In einer weiteren Ausgestaltung ist beispielsweise vorgesehen, dass die zweite Verbindungsleitung einen zwischen dem Kopplungsglied und dem dritten Kontaktelement angeordneten Übergangskondensator aufweist und dass zwischen dem Übergangskondensator und dem dritten Kontaktelement ein HF-neutraler Raum des Gleichstromeinspeiseglieds angeordnet ist, der bevorzugt einen Überspannungsableiter aufweist.

In einer Ausbildung des Einbauteils ist beispielsweise vorgesehen, dass das dritte Kontaktelement eine zweipolige Steckbuchse mit einem ersten Pol und einem zweiten Pol ist, wobei einer der beiden Pole ein Erdungspol ist.

In einer Ausbildung des Einbauteils ist beispielsweise vorgesehen, dass ein Widerstandsmessgerät an das Einbauteil austauschbar angeordnet ist.
Ein weiterer Gedanke der Erfindung, der abhängig wie unabhängig von der oben beschriebenen Sendeantennenanlage angewendet werden kann, betrifft ein Verfahren zur Überwachung einer elektrischen Leitungseigenschaft einer Sendeantennenanlage mit einer Sendeleistung von wenigstens 2 kW.

Es ist ein Verfahren zur Überwachung einer elektrischen Leitungseigenschaft einer Sendeantennenanlage mit einer Sendeleistung von wenigstens 2 kW vorgesehen. Die Sendeantennenanlage weist wenigstens einen Leistungstransportpfad und wenigstens eine erste Sendeantenne auf.

Zur Überwachung wird wenigstens ein Abschnitt des Leistungstransportpfads mit einer Messgleichspannung beaufschlagt und eine ohmsche Widerstandsbestimmung wenigstens des Abschnitts des Leistungstransportpfads vorgenommen.

In einer Ausgestaltung des Verfahrens erfolgt die ohmsche Widerstandsbestimmung zeitabhängig.

In einer bevorzugten Ausbildung des Verfahren wird bei Unterschreiten eines festgesetzten Schwellenwertes des ohmschen Widerstands, bevorzugt bei Unterschreiten eines ohmschen Widerstandswerts zwischen von 100 kOhm und 500 kOhm, besonders bevorzugt bei Unterschreiten eines ohmschen Widerstandswerts zwischen von 150 kOhm und 250 kOhm, ein Alarmsignal ausgegeben.

Die genannten Werte sind hierbei niedrig genug, um etwaige Fehlalarme durch eine wetterbedingte Absenkung der Widerstandswerte, beispielsweise aufgrund von hoher Luftfeuchte und/oder salzhaltiger Luft, zu vermeiden.
Bevorzugt erfolgt die ohmsche Widerstandsbestimmung mit einer gesteuerten Widerstandsbestimmung in kontinuierlicher Weise oder zu vorbestimmten Zeitpunkten.

Es kann des Weiteren eine Verwendung einer Sendeantennenanlage zum überwachten Betrieb einer Fernmeldeanlage unter durchgehender oder planmäßig wiederkehrender Isolationsmessung mittels Beaufschlagung wenigstens eines Abschnitts des Leistungstransportpfads der Sendeantennenanlage mit einer Messgleichspannung und einer ohmschen Widerstandsbestimmung des Abschnitts des Leistungstransportpfads vorgesehen sein.

Beispielsweise kann vorgesehen sein, dass Messungen in äquidistanten Abständen vorgenommen werden. Hierzu ist nicht notwendigerweise eine aktive Regelung notwendig, sondern eine Steuerung kann nach einem zuvor festgelegten Zeitplan erfolgen.

Zur Gewährleistung der gewünschten Funktionsfähigkeit hat sich eine Vornahme von Messungen in Zeitabständen von mehreren Stunden als vollkommen ausreichend erwiesen. Für eine einzelne Messung kann eine vorgenommene Messdauer von wenigen Sekunden bereits völlig ausreichend sein, um ein aussagekräftiges Ergebnis zu erlangen.

Es kann beispielsweise vorgesehen sein, dass Messungen in einem Zeitabstand von N Stunden zwischen einer i-ten Messung und einer (i+1)-ten Messung erfolgen, wobei i eine positive natürliche Zahl ist, die als Laufindex genutzt wird. Die Zahl N kann hierbei eine positive Dezimalzahl zwischen 2 und 10, bevorzugt zwischen 4 und 8, besonders bevorzugt zwischen 5 und 7 sein.

Diese genannten Zeitabstände und Messdauern sind für den gewünschten Zweck ausreichend, da dem Schadensfall eine oft tagelang oder gar wochenlang zu beobachtende Reduktion des gemessenen Widerstands vorhergehen.

Das Messergebnis kann zum Beispiel direkt vor Ort angezeigt werden. Auch besteht die Möglichkeit, dass das Messergebnis übertragen wird, beispielweise über ein Bussystem. Beispielsweise kann eine Fernübertragung vorgesehen sein, die eine Überwachung fernab von der Sendeanlage ermöglicht. Dieses kann zum Beispiel ein zentrales Überwachungszentrum sein, welches in der Lage ist, eine Mehrzahl an Sendeanlagen, Sendemasten und Funktürme an unterschiedlichen Orten zu überwachen. Vorzugsweise erfolgt die Überwachung computergesteuert. Eine Messung kann dadurch nicht nur überwacht sondern auch computergesteuert ausgelöst werden. Darüber hinaus besteht die Möglichkeit, die Messung manuell auszulösen. Vorzugsweise werden die Messergebnisse gespeichert und können automatisiert ausgewertet werden, zum Beispiel statistisch ausgewertet werden. Beispielweise kann darüber eine Instandsetzung getriggert werden, insbesondere eine vorausschauende Überprüfung, bevor ein größerer Schaden entstehen kann.

Weiterhin kann ein Funkturm mehrere derartige Überwachungen entlang des Leistungstransportpfads verteilt aufweisen, vorzugsweise hintereinander in größeren Abständen zueinander entlang des Pfads. Dieses ermöglicht nicht nur zum Beispiel die gesamte Messung des Leistungstransportpfads. Vielmehr besteht die Möglichkeit, durch jeweilige Messung ein oder mehrere Fehlerstellen besser entlang des Leistungstransportpfads lokalisieren zu können. So kann zum Beispiel über einen Abgleich mit einer Referenzmessung eine Abweichung detektiert werden. Beginnt die Messung mit einer Überwachung, die am nächsten zur Sendeantenne angeordnet ist, aber dort noch keine oder nur geringste Abweichungen zur Referenzmessung vorliegen, kann dann durch die Messung an der nächsten, weiter entfernt von der Sendeantenne angeordneten Überwachung sodann dabei festgestellt werden, ob sich eine Abweichung außerhalb einer Toleranz eingestellt hat. So kann immer weitergehend die Prüfung erfolgen, bis schließlich darüber eien Abweichung zum ersten Mal außerhalb der Toleranz liegt. Dadurch lässt sich die Fehlerstelle eingrenzen, was die Arbeiten zum Beispiel in einem Funkturm erleichtert.

Weitere vorteilhafte Ausgestaltungen und Weiterbildungen gehen aus den nachfolgenden Figuren hervor. Die aus den Figuren hervorgehenden Einzelheiten und Merkmale sind jedoch nicht auf diese beschränkt. Vielmehr können ein oder mehrere Merkmale mit ein oder mehreren Merkmalen aus der obigen Beschreibung zu neuen Ausgestaltung verknüpft werden. Insbesondere dienen die nachfolgenden Ausführungen nicht als Beschränkung des jeweiligen Schutzbereiches, sondern erläutern einzelne Merkmale sowie Ihr mögliches Zusammenwirken untereinander.

Es zeigen im Folgenden:

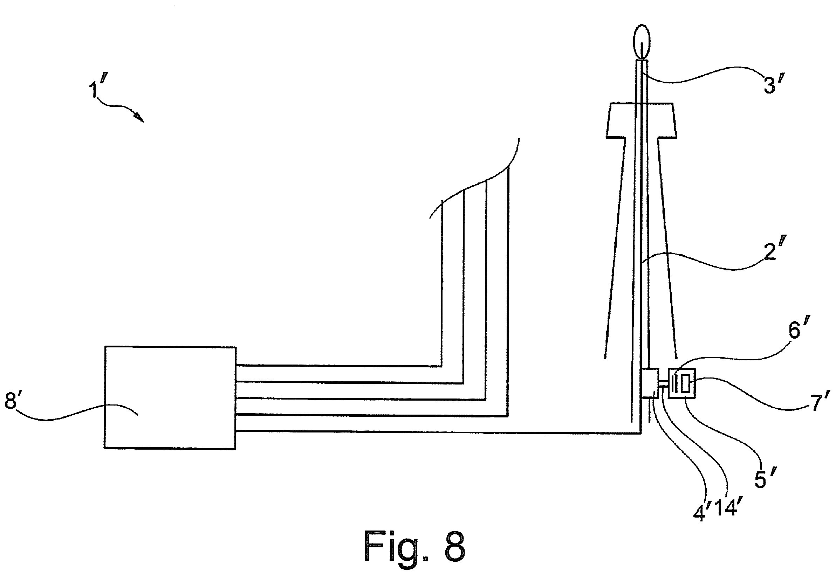

Fig. 8: Eine Prinzipskizze einer Sendeantennenanlage mit einer Überwachung einer elektrischen Leitungseigenschaft der Sendeantennenanlage;

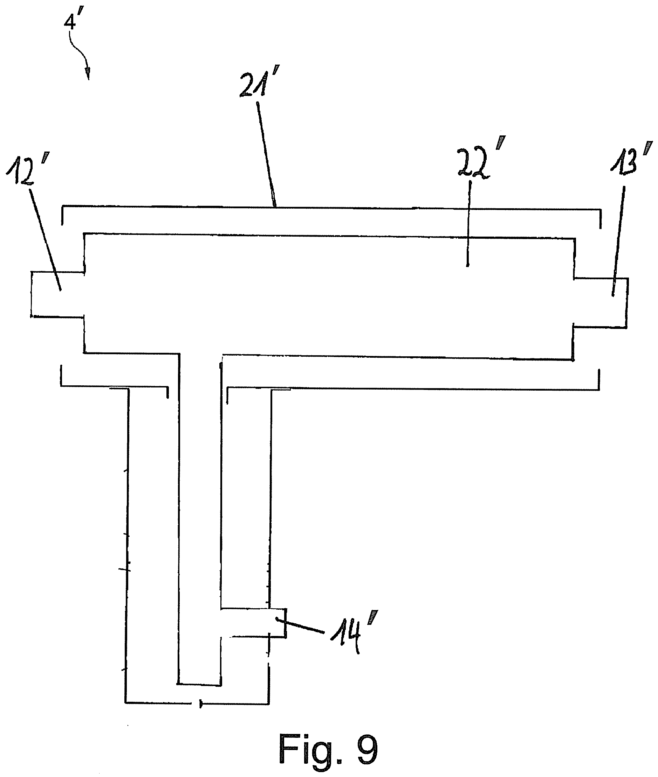

Fig. 9: eine Prinzipskizze einer beispielhaften Ausgestaltung eines Einbauteils mit einer Einkopplung einer Widerstandsmesseinrichtung;

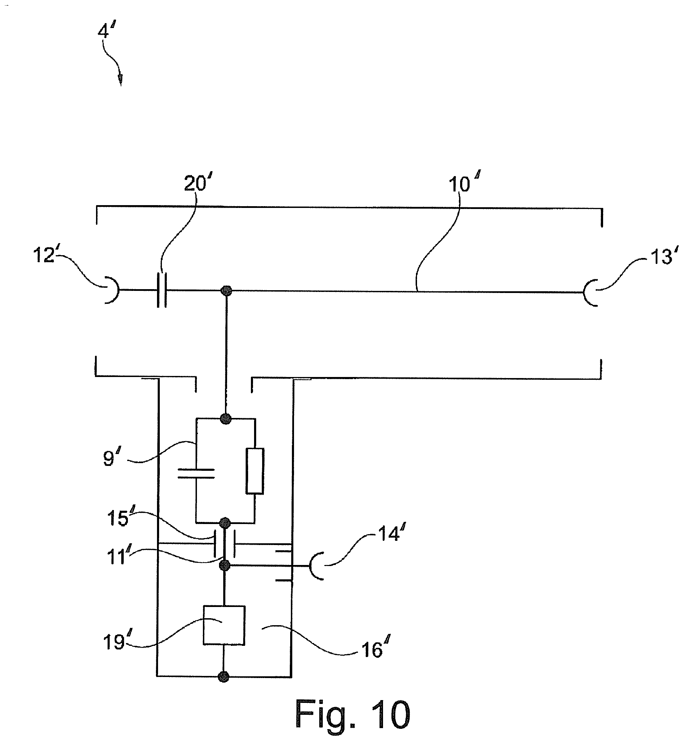

Fig. 10: eine Prinzipskizze einer beispielhaften Ausgestaltung eines Einbauteils mit einer Einkopplung einer Widerstandsmesseinrichtung;

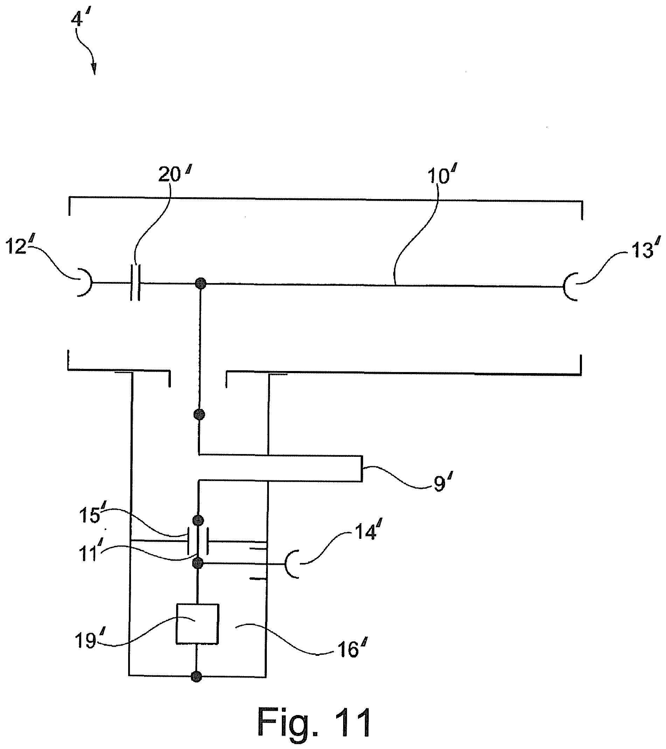

Fig. 11: eine Prinzipskizze einer weiteren beispielhaften Ausgestaltung eines Einbauteils mit einer Einkopplung einer Widerstandsmesseinrichtung;

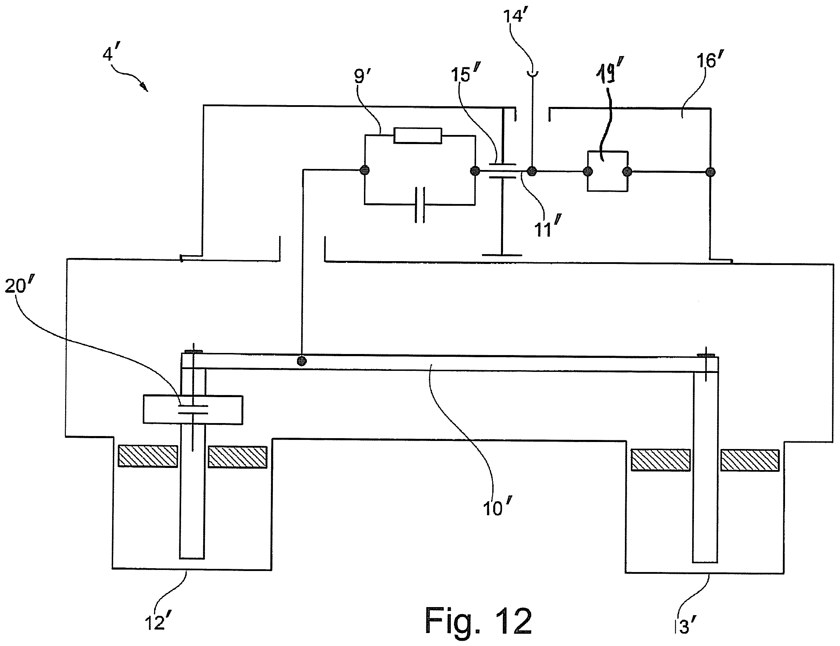

Fig. 12: eine Prinzipskizze einer weiteren beispielhaften Ausgestaltung eines Einbauteils mit einer Einkopplung einer Widerstandsmesseinrichtung.

Fig. 8 ist eine Sendeantennenanlage 1' mit einer Sendeleistung von wenigstens 2 kW und mit einer Überwachung einer elektrischen Leitungseigenschaft der Sendeantennenanlage 1' zu entnehmen. Die Sendeantennenanlage 1' weist eine erste Sendeantenne 3' auf, welche über einen Leistungstransportpfad 2' mit über die erste Sendeantenne 3' zu emittierenden Signalen versorgt wird. Die Versorgung der ersten Sendeantenne 3' mit den zu emittierenden Signalen erfolgt ausgehend von einer Sendeanlage 8'. Zum Schutz der Sendeantennenanlage 1', insbesondere auch für eine Erhöhung der Sicherheit der Sendeanlage durch Vermeidung beispielsweise von blindwiderstandverursachten Brandentzündungen, weist die Infrastruktur der ersten Sendeantenne 3' zur Überwachung einer elektrischen Leitungseigenschaft der Sendeanlage ein Einbauteil 4' auf, welches in der gezeigten Ausgestaltung der Sendeantennenanlage 1' zum Beispiel in der Verrohrung des Leistungstransportpfad 2' angeordnet ist. An ein drittes Kontaktelement 14' des Einbauteils 4' ist eine als Isolationsmesseinrichtung ausgebildete Widerstandsmesseinrichtung 5' angeordnet. Die Widerstandsmesseinrichtung 5' weist eine Gleichspannungsquelle 6' sowie ein Widerstandsmessgerät 7' auf. Von der Sendeanlage 8' ausgehend sind neben der zu der ersten Sendeantenne 3' führenden Verkabelung vier weitere dargestellte Kabel zu entnehmen, die zu weiteren Antennen hin verlaufen, welche in Fig. 8 jedoch nicht dargestellt sind.

Fig. 9 ist schematisch eine Ausgestaltung eines Einbauteils 4' mit zumindest einer Einkopplung einer Widerstandsmesseinrichtung in einen Leistungstransportpfad einer Sendeantennenanlage mit einer Sendeleistung von wenigstens 2 kW zu entnehmen. Fig. 9 ist ein Gehäuse 21' zu entnehmen innerhalb welchem ein Gleichstromeinspeiseglied (22') angeordnet ist. Das Gleichstromeinspeiseglied weist einen erstes Kontaktelement 12' zur Ankopplung an die Sendeanlage, ein zweites Kontaktelement 13' zur Ankopplung an den Leistungstransportpfad sowie ein drittes Kontakteelement 14' auf. Das dritte Kontaktelement 14' dient dem Anschluss einer Gleichspannungsquelle und/oder eines Messgeräts zur Bestimmung des Widerstands. Ebenfalls kann vorgesehen sein, dass eine Gerätekombination angeschlossen wird, welche eine Gleichspannungsquelle und/oder ein Messgerät zur Bestimmung des Widerstands aufweist. Insbesondere kann vorgesehen sein, dass an das dritte Kontaktelement 14' ein handelsübliches Isolationsmessgerät angeschlossen wird. Eine Gleichspannung zur Beaufschlagung des Leistungstransportpfades wird über das Gleichstromeinspeiseglied 22', das in dem Einbauteil 4' befindlich ist, in den Leistungstransportpfad eingespeist.

Fig. 10 ist eine Ausgestaltung eines Einbauteils 4' mit zumindest einer Einkopplung einer Widerstandsmesseinrichtung 5' in einen Leistungstransportpfad 2' einer Sendeantennenanlage mit einer Sendeleistung von wenigstens 2 kW zu entnehmen. In der gezeigten Ausgestaltung ist das Einbauteil 4' als Kompaktteil ausgeführt, das vollständig in einem Gehäuse 21' angeordnet ist. Das Einbauteil 4' umfasst in der gezeigten Ausgestaltung ein Gleichstromeinspeiseglied, dessen Ausführung in dem innerhalb des Gehäuses 21' dargestellten Schaltbild dargestellt ist. Das Gleichstromeinspeiseglied weist ein erstes Kontaktelement 12' und ein zweites Kontaktelement 13' auf. Das erste Kontaktelement 12' ist zur Verbindung des Einbauteils 4' mit einer Sendeseite, in der gezeigten Ausgestaltung mit einer Sendeanlage, der Sendeantennenanlage vorgesehen. Mittels der ersten Verbindungsleitung 10', welche zwischen dem ersten Kontaktelement 12' und dem zweiten Kontaktelement 13' angeordnet ist, ist die Sendeseite der Sendeantennenanlage mit einem Leistungstransportpfad 2' verbunden, welcher an dem zweiten Kontaktelement 13' mit dem Einbauteil verbunden wird. Der Leistungstransportpfad 2' führt ausgehend von der hergestellten Kontaktierung zu wenigstens einer ersten Sendeantenne 3'. Die erste Verbindungsleitung 10' weist einen Trennkondensator 20' auf, der die Sendeanlage und den Leistungstransportpfad miteinander kapazitiv koppelt.

Durch die kapazitive Kopplung wird erreicht, dass die erste Verbindungsleitung für den Wechselstrom durchlässig ist, der für den Transport des Sendesignals genutzt wird. Gegenüber eines Transports eines Gleichstroms ist die erste Verbindungsleitung über den Trennkondensator 20' hingegen weitestgehend gesperrt, so dass beispielsweise eine Einspeisung von Störsignalen in den Leistungstransportpfad vermieden ist.

Auf der Seite des Trennkondensators 20' angeordnet, welche dem zweiten Kontaktelement 13' zugewandt ist, ist eine zweite Verbindungsleitung 11' angeordnet. Die zweite Verbindungsleitung 11' verbindet den leistungstransportseitigen Abschnitt der ersten Verbindungsleitung 10' sowie die über das zweite Kontaktelement 13' an dieses angeschlossene Infrastruktur mit dem dritten Kontaktelement 14'. Das dritte Kontaktelement 14' ist für die beabsichtigte Einkopplung der Widerstandsmesseinrichtung in den Leistungstransportpfad vorgesehen. Zur Einkopplung der Widerstandsmesseinrichtung in den Leistungstransportpfad ist ausgehend von der ersten Verbindungsleitung 10' hin zum dritten Kontaktelement 14' in der gezeigten Ausgestaltung des Einbauteils 4' zum ersten ein Kopplungsglied 9' angeordnet. Das Kopplungsglied 9' ist als Parallelanordnung eines Kondensators und einer Spule ausgebildet. Die Verbindung des Kopplungsglieds 9' mit dem dritten Kontaktelement 14' erfolgt über einen Übergangskondensator 15'. Des Weiteren ist parallel zu dem dritten Kontaktelement 14' ein Überspannungsableiter 19' als Bestandteil des Gleichstromeinspeiseglieds ausgebildet. Der Überspannungsableiter ist innerhalb eines HF-neutralen Raums 16' angeordnet. Der Überspannungsableiter ist in der gezeigten Ausgestaltung als Gasentladungsüberspannungsableiter ausgebildet. Der Gasentladungsüberspannungsableiter ist in der Lage, elektromagnetische Impulse insbesondere natürlichen Ursprungs, wie direkte oder indirekte Blitzschläge, zu neutralisieren und hierdurch von den angeschlossenen Geräten fernzuhalten. Die Neutralisierung elektromagnetischer Impulse von den angeschlossenen Geräten wird durch die Anordnung des Überspannungsableitung 19' innerhalb des HF-neutralen Raums 16' und durch die elektrostatische Trennung von den übrigen Bauteilen des Gleichstromeinspeiseglieds mittels eines Übergangs Kondensator 15' in besonders effizienter Weise ausgebildet.

Fig. 11 ist eine weitere Ausgestaltung eines Einbauteils 4' mit zumindest einer Einkopplung einer Widerstandsmesseinrichtung 5' in einen Leistungstransportpfad 2' einer Sendeantennenanlage zu entnehmen. Die Sendeantennenanlage weist eine Sendeleistung von wenigstens 2 kW auf. Im Unterschied zu der in der Fig. 10 dargestellten Ausgestaltung des Einbauteils 4' ist die in der Fig. 11 dargestellte Ausgestaltung eines Einbauteils 4' dahingehend modifiziert, dass die Verbindung des zweiten Kontaktelement 13' mit dem dritten Kontaktelement 14' über ein Kopplungsglied 9' erfolgt, das im Unterschied zu der Ausgestaltung der Fig. 11 als λ/4-Stichleitung ausgebildet ist. Die λ/4-Stichleitung ist auf die Hochfrequenzresonanz der an das dritte Kontaktelement angeschlossenen in der Fig. 11 nicht dargestellten ersten Sendeantenne 3' und dem zu dieser hinführenden Leistungstransportpfad angepasst. Bei der λ/4-Stichleitung handelt es sich um eine leer laufende Leitung, mittels welcher dem Schaltkreis gezielt ein Blindwiderstand zur Verfügung gestellt ist.

In einer Ausgestaltung kann beispielsweise vorgesehen sein, dass an dem dritten Kontaktelement 14' ein Isolationsmessgerät angeschlossen wird, welches ein gleichzeitiges Beaufschlagen des Leistungstransportpfads 2' mit der Gleichspannung und ein Messen des Ohmschen Widerstands des mit der Gleichspannung beaufschlagten Leistungstransport vorsieht.

Beispielsweise kann ein stationäres Isolationsmessgerät des Typs ST 2383 der Firma Sourcetronic GmbH, Fahrenheitstrasse 1, D-28359 Bremen, mit einer einstellbaren Messpannung zwischen 10 V und 1000 V und einem Isomessbereich von 100 kOhm und 10 TOhm mit einem einstellbaren Signalfenster genutzt werden. Eine Auswertung kann über ein akustisches Signal mit einer binären Ausgabe eines Signals bei einem Unterschreiten eines zuvor definierten und eingestellten Grenzwertes erfolgen. Ein Ansteuern und/oder ein Auswerten der Messdaten kann über eine Interface-Schnittstelle RS 232 erfolgen. Der Messzyklus ist einstellbar.

Eine weitere Ausgestaltung eines Einbauteils 4' mit Einkopplung zumindest einer Widerstandsmesseinrichtung 5' ist Fig. 12 zu entnehmen. Die Ausgestaltung der Fig. 12 ist in ihrer prinzipiellen Anordnung der Ausbildung des Gleichstromeinspeiseglieds der Ausgestaltung eines Einbauteils der Fig. 10 vergleichbar. Neben der Lageorientierung der Bauteile zueinander besteht ein wesentlicher Unterschied der Fig. 12 zu der Ausgestaltung der Fig. 10 in der Ausführung des ersten Kontaktelements 12' und des zweiten Kontaktelements 13'. Das erste Kontaktelement 12' und das zweite Kontaktelement 13' sind in der der Fig. 12 zu entnehmenden Ausgestaltung als Steckbuchsen ausgebildet. Der Kondensator 10' ist zur Verbesserung der kapazitiven Trennung des ersten Kontaktelements 12' und des zweiten Kontaktelements 13' als Keramikplatte ausgebildet. Für die gezeigte Ausgestaltung der Keramikplatte weist zum Beispiel eine Kapazität von mindestens 500 Mikrofarad auf. Die in der Fig. 12 gezeigte Ausgestaltung entspricht in ihrer Ausbildung zum Beispiel einem Bügelstecker, wie er in vielen Fällen an einem Speiseleitungsbeginn einer Sendeantennenanlage verwendet wird, in der die Widerstandsmesseinrichtung integriert angeordnet ist.

## Patentansprüche

1. Überwachungsvorrichtung (4') für eine Sendeantennenanlage (1'), die einen Leistungstransportpfad (2') mit einem Innenleiter und einem Außenleiter aufweist, mit
- einer Messsignalabgreifleitung zum galvanischen Anschließen an den Innenleiter und
- einer Auswerte- und Ansteuereinheit mit einem mit der Messsignalabgreifleitung verbundenen Eingang und mit einem Ausgang, und
- einem Unterbrechungsschalter zum Unterbrechen der Sendesignal-Versorgung der Sendeantennenanlage,
- wobei der Unterbrechungsschalter mittels eines Ausgangssignals der Auswerte- und Ansteuereinheit ein- und ausschaltbar ist und
- wobei die Auswerte- und Ansteuereinheit einen Messwert eines über die Messsignalabgreifleitung zuführbaren Messsignals in einem vorgebbaren Frequenzbereich zwischen 0 und 60 kHz mit einem Schwellwert vergleicht und dann, wenn der Messwert in dem besagten Frequenzbereich größer ist als der Schwellwert, an ihrem Ausgang ein Ausschaltsignal zum zumindest zeitweisen Ausschalten des Unterbrechungsschalters ausgibt.

2. Überwachungsvorrichtung (4') nach Anspruch 1, **dadurch gekennzeichnet, dass** die Auswerte- und Ansteuereinheit einen Messwert eines über die Messsignalabgreifleitung zuführbaren Messsignals in einem vorgebbaren Frequenzbereich zwischen 0 und 20 kHz mit einem Schwellwert vergleicht und dann, wenn der Messwert in dem besagten Frequenzbereich größer ist als der Schwellwert, an ihrem Ausgang ein Ausschaltsignal zum zumindest zeitweisen Ausschalten des Unterbrechungsschalters ausgibt.

3. Überwachungsvorrichtung (4') nach Anspruch 1 oder 2, **dadurch gekennzeichnet, dass** der mit dem Schwellwert verglichene Messwert einen Intensitätswert des Messsignals darstellt.

4. Überwachungsvorrichtung (4') nach einem der Ansprüche 1 bis 3, **dadurch gekennzeichnet, dass** die Auswerte- und Ansteuereinheit nach einem Ausschaltsignal automatisch ein Einschaltsignal für den Unterbrechungsschalter ausgibt und überprüft, ob der Messwert in dem besagten Frequenzbereich größer ist als der Schwellwert, woraufhin, wenn dies der Fall ist, die Auswerte- und Ansteuereinheit wieder ein Ausschaltsignal zum Ausschalten des Unterbrechungsschalters ausgibt.

5. Überwachungsvorrichtung (4') nach einem der Ansprüche 1 bis 4, **dadurch gekennzeichnet, dass** die Auswerte- und Ansteuereinheit wechselweise Einschalt- und Ausschaltsignale für den Unterbrechungsschalter aussendet, und zwar solange der Messwert in dem besagten Frequenzbereich größer ist als der Schwellwert, wobei nach einer vorgegebenen Anzahl von Wiederholungen der wechselweisen Ausgabe von Einschalt- und Ausschaltsignalen der Unterbrechungsschalter ausgeschaltet bleibt.

6. Überwachungsvorrichtung (4') nach einem der Ansprüche 1 bis 5, **dadurch gekennzeichnet, dass** die Messsignalabgreifleitung eine λ/4-Leitung ist, wobei A die Wellenlänge der Trägerfrequenz des Sendesignals der Sendeantennenanlage ist.

7. Überwachungsvorrichtung (4') nach einem der Ansprüche 1 bis 6, **dadurch gekennzeichnet, dass** für eine Sendeantennenanlage mit einer galvanisch offenen Antenne die Auswerte- und Ansteuereinheit über die Messsignalabgreifleitung einen Messstrom in den Innenleiter einprägt und den Widerstand zwischen Außenleiter und Innenleiter des Leistungspfads (2') misst und, wenn der gemessene Widerstand kleiner ist als ein vorgebbarer Minimalwiderstand, an ihrem Ausgang ein Ausschaltsignal für den Unterbrechungsschalter ausgibt und/oder an ihrem Ausgang ein Anzeigesignal zur optischen Anzeige des gemessenen Widerstands oder eines diesen charakterisierenden Werts ausgibt.

8. Überwachungsvorrichtung (4') einem der Ansprüche 1 bis 7, **dadurch gekennzeichnet, dass** für eine Sendeantennenanlage (1') mit einer galvanisch geschlossenen Antenne die Auswerte- und Ansteuereinheit über die Messsignalabgreifleitung eine Messung des Widerstands des elektrischen Kreises aus Innenleiter, Außenleiter und Antenne durchführt und, wenn der gemessene Widerstand größer ist als ein vorgebbarer zulässiger Maximalwiderstand, an ihrem Ausgang ein Ausschaltsignal für den Unterbrechungsschalter ausgibt, und/oder ein Anzeigesignal zur optischen Anzeige des gemessenen Widerstands oder eines diesen charakterisierenden Werts ausgibt.

9. Überwachungsvorrichtung (4') nach einem der Ansprüche 1 bis 8, **dadurch gekennzeichnet, dass** die Messsignalabgreifleitung an den Innenleiter eines Brückensteckers der Sendeantennenanlage (1') galvanisch anschließbar ist.

10. Verfahren zur Überwachung einer Sendeantennenanlage (1'), die einen Leistungstransportpfad (2') mit einem Innenleiter und einem Außenleiter aufweist,
- wobei bei dem Verfahren von dem Innenleiter über eine mit diesem galvanisch verbundenen Messsignalabgreifleitung ein Messsignal abgegriffen wird, und
- ein Messwert des Messsignals in einem vorgebbaren Frequenzbereich zwischen 0 und 60 kHz mit einem Schwellwert verglichen wird und
- dann, wenn der Messwert in dem besagten Frequenzbereich größer ist als der Schwellwert, die Zufuhr eines Sendesignals zur Sendeantennenanlage (1') zumindest zeitweise unterbrochen wird.

11. Verfahren nach Anspruch 10, **dadurch gekennzeichnet, dass** ein Messwert des Messsignals in einem vorgebbaren Frequenzbereich zwischen 0 und 20 kHz mit einem Schwellwert verglichen wird und dann, wenn der Messwert in dem besagten Frequenzbereich größer ist als der Schwellwert, die Zufuhr eines Sendesignals zur Sendeantennenanlage (1') zumindest zeitweise unterbrochen wird.

12. Verfahren nach Anspruch 10 oder 11, **dadurch gekennzeichnet, dass** als Messsignalabgreifleitung eine λ/4-Leitung verwendet wird, wobei A die Wellenlänge der Trägerfrequenz des Sendesignals der Sendeantennenanlage (1') ist.

13. Verfahren nach einem der Ansprüche 10 bis 12, **dadurch gekennzeichnet, dass** für eine Sendeantennenanlage (1') mit einer galvanisch offenen Antenne über die Messsignalabgreifleitung ein Messstrom in den Innenleiter einprägt wird und der Widerstand zwischen Außenleiter und Innenleiter des Leistungspfads (2') gemessen wird und, wenn der gemessene Widerstand kleiner ist als ein vorgebbarer Minimalwiderstand, die Zufuhr des Sendesignals zur Sendeantennenanlage (1') zumindest zeitweise unterbrochen wird und/oder ein Anzeigesignal zur optischen Anzeige des gemessenen Widerstands oder eines diesen charakterisierenden Werts ausgegeben wird.

14. Verfahren nach einem der Ansprüche 10 bis 13, **dadurch gekennzeichnet, dass** für eine Sendeantennenanlage (1') mit einer galvanisch geschlossenen Antenne über die Messsignalabgreifleitung eine Messung des Widerstands des elektrischen Kreises aus Innenleiter, Außenleiter und Antenne durchgeführt wird und, wenn der gemessene Widerstand größer ist als ein vorgebbarer zulässiger Maximalwiderstand, an ihrem Ausgang ein Ausschaltsignal für den Unterbrechungsschalter ausgegeben wird, und/oder ein Anzeigesignal zur optischen Anzeige des gemessenen Widerstands oder eines diesen charakterisierenden Werts ausgegeben wird.

15. Verfahren nach einem der Ansprüche 10 bis 14, **dadurch gekennzeichnet, dass** die Messsignalabgreifleitung an den Innenleiter eines Brückensteckers der Sendeantennenanlage (1') galvanisch angeschlossen wird.

16. Sendeantennenanlage mit einem Leistungstransportpfad (2') mit einem Innenleiter und einem Außenleiter und mit einer Überwachungsvorrichtung (4') nach einem der Ansprüche 1 bis 9.

## Claims

1. Monitoring device (4') for a transmitting antenna system (1'), comprising a power transport path (2') with an inner conductor and an outer conductor, the device comprising
- a measuring signal tapping line for galvanic connection to the inner conductor, and
- an evaluation and control unit having an input connected to the measuring signal tapping line and an output, and
- an interruption circuit for interrupting the transmission signal supply of the transmitting antenna system,
- wherein the interruption circuit is adapted to be switched on and off through an output signal of the evaluation and control unit, and
- wherein the evaluation and control unit compares a measuring value of a measuring signal in a predeterminable frequency range between 0 and 60 kHz, which signal is adapted to be supplied via the measuring signal tapping line, to a threshold value and, if the measuring value exceeds the threshold value in said frequency range, outputs at its output a switch-off signal for an at least temporary deactivation of the interruption circuit.

2. Monitoring device (4') of claim 1, **characterized in that** the evaluation and control unit compares a measuring value of a measuring signal in a predeterminable frequency range between 0 and 20 kHz, which signal is adapted to be supplied via the measuring signal tapping line, to a threshold value and, if the measuring value exceeds the threshold value in said frequency range, outputs at its output a switch-off signal for an at least temporary deactivation of the interruption circuit.

3. Monitoring device (4') of claim 1 or 2, **characterized in that** the measuring value compared with the threshold value represents an intensity value of the measuring signal.

4. Monitoring device (4') of one of claims 1 to 3, **characterized in that**, after a switch-off signal, the evaluation and control unit automatically outputs a switch-on signal for the interruption circuit and checks, whether the measuring value exceeds the threshold value in said frequency range, whereupon, if this is true, the evaluation and control unit again outputs a switch-off signal for the deactivation of the interruption circuit.

5. Monitoring device (4') of one of claims 1 to 4, **characterized in that** the evaluation and control unit alternately outputs switch-on and switch-off signals for the interruption circuit, namely as long the measuring value exceeds the threshold value in said frequency range, wherein, after a predetermined number of repeats of the alternate output of switch-on and switch-off signals, the interruption circuit remains deactivated.

6. Monitoring device (4') of one of claims 1 to 5, **characterized in that** the measuring signal tapping line is a λ/4 line, where A is the wavelength of the carrier frequency of the transmission signal of the transmitting antenna system.

7. Monitoring device (4') of one of claims 1 to 6, **characterized in that** for a transmitting antenna system having a galvanically open antenna, the evaluation and control unit impresses a measuring current on the inner conductor via the measuring signal tapping line and measures the resistance between the outer conductor and the inner conductor of the power path (2') and, if the measured resistance is lower than a predeterminable minimum resistance, outputs at its output a switch-off signal for the interruption circuit and/or outputs at its output an indication signal for the optical indication of the measured resistance or of a value characterizing the same.

8. Monitoring device (4') of one of claims 1 to 7, **characterized in that** for a transmitting antenna system (1') having a galvanically closed antenna, the evaluation and control unit performs a measuring of the resistance of the electric circuit formed by the inner conductor, the outer conductor and the antenna via the measuring signal tapping line and, if the measured resistance is higher than a predeterminable allowable maximum resistance, outputs at its output a switch-off signal for the interruption circuit, and/or outputs an indication signal for the optical indication of the measured resistance or of a value characterizing the same.

9. Monitoring device (4') of one of claims 1 to 8, **characterized in that** the measuring signal tapping line is configured to be galvanically connected to the inner conductor of a bridging plug of the transmitting antenna system (1').

10. Method for monitoring a transmitting antenna system (1'), comprising a power transport path (2') with an inner conductor and an outer conductor,
- wherein, in the method, a measuring signal is tapped from the inner conductor via a measuring signal tapping line galvanically connected thereto, and
- in a predeterminable frequency range between 0 and 60 kHz, a measuring value of the measuring signal is compared to a threshold value, and
- if said measuring value exceeds the threshold value in said frequency range, the supply of a transmission signal to the transmitting antenna system (1') is interrupted at least temporarily.

11. Method of claim 10, **characterized in that** a measuring value of the measuring signal is compared in a predeterminable frequency range between 0 and 20 kHz to a threshold value and, if the measuring value exceeds the threshold value in said frequency range, the supply of a transmission signal to the transmitting antenna system (1') is interrupted at least temporarily.

12. Method of claim 10 or 11, **characterized in that** a λ/4 line is used as the measuring signal tapping line, where A is the wavelength of the carrier frequency of the transmission signal of the transmitting antenna system (1').

13. Method of one of claims 10 to 12, **characterized in that** for a transmitting antenna system (1') having a galvanically open antenna, the a measuring current is impressed on the inner conductor via the measuring signal tapping line and the resistance between the outer conductor and the inner conductor of the power path (2') is measured and, if the measured resistance is lower than a predeterminable minimum resistance, the supply of a transmission signal to the transmitting antenna system (1') is interrupted at least temporarily and/or an indication signal for the optical indication of the measured resistance or of a value characterizing the same is outputted.

14. Method of one of claims 10 to 13, **characterized in that** for a transmitting antenna system (1') having a galvanically closed antenna, a measuring of the resistance of the electric circuit formed by the inner conductor, the outer conductor and the antenna is performed via the measuring signal tapping line and, if the measured resistance is higher than a predeterminable allowable maximum resistance, a switch-off signal for the interruption circuit is outputted at its output, and/or an indication signal for the optical indication of the measured resistance or of a value characterizing the same is outputted.

15. Method of one of claims 10 to 14, **characterized in that** the measuring signal tapping line is galvanically connected to the inner conductor of a bridging plug of the transmitting antenna system (1').

16. Transmitting antenna system comprising a power transport path (2') with an inner conductor and an outer conductor and with a monitoring device (4') according to one of clams 1 to 9.

## Revendications

1. Dispositif de surveillance (4') destiné à une installation d'antenne émettrice (1'), comportant un trajet de transport de puissance (2') doté d'un conducteur intérieur et d'un conducteur extérieur, avec
- un conducteur de saisie de signal de mesure pour raccordement galvanique au conducteur intérieur et
- une unité de contrôle et de commande dotée d'une entrée reliée au conducteur de saisie de signal de mesure et d'une sortie, et
- un interrupteur destiné à interrompre l'alimentation du signal d'émission de l'installation d'antenne émettrice,
- dans lequel l'interrupteur peut être ouvert ou fermé par le biais d'un signal de sortie de l'unité de contrôle et de commande et
- dans lequel l'unité de contrôle et de commande compare à une valeur seuil une valeur de mesure d'un signal de mesure fourni par le biais du conducteur de saisie de signal de mesure dans un intervalle de fréquence entre 0 et 60 kHz pouvant être prédéfini et ensuite, lorsque la valeur de mesure dans l'intervalle de fréquence spécifié est supérieure à la valeur seuil, délivre à sa sortie un signal d'ouverture ouvrant l'interrupteur au moins temporairement.

2. Dispositif de surveillance (4') selon la revendication 1, **caractérisé en ce que** l'unité de contrôle et de commande compare à une valeur seuil une valeur de mesure d'un signal de mesure pouvant être fourni par le biais du conducteur de saisie de signal de mesure dans un intervalle de fréquence entre 0 et 20 kHz pouvant être prédéfini et ensuite, lorsque la valeur de mesure dans l'intervalle de fréquence spécifié est supérieure à la valeur seuil, délivre à sa sortie un signal d'ouverture ouvrant l'interrupteur au moins temporairement.

3. Dispositif de surveillance (4') selon la revendication 1 ou 2, **caractérisé en ce que** la valeur de mesure comparée à la valeur seuil représente une valeur d'intensité du signal de mesure.

4. Dispositif de surveillance (4') selon l'une des revendications 1 à 3, **caractérisé en ce que** l'unité de contrôle et de commande délivre automatiquement un signal de fermeture pour l'interrupteur après un signal d'ouverture et vérifie si la valeur de mesure dans l'intervalle de fréquence spécifié est supérieure à la valeur seuil, après quoi, si c'est le cas, l'unité de contrôle et de commande délivre de nouveau un signal d'ouverture afin d'ouvrir l'interrupteur.

5. Dispositif de surveillance (4') selon l'une des revendications 1 à 4, **caractérisé en ce que** l'unité de contrôle et de commande émet de manière alternée des signaux de fermeture et d'ouverture pour l'interrupteur, à savoir tant que la valeur de mesure dans l'intervalle de fréquence spécifié est supérieure à la valeur seuil, dans lequel après un nombre prédéfini de répétitions d'émissions alternées de signaux de fermeture et d'ouverture, l'interrupteur reste ouvert.

6. Dispositif de surveillance (4') selon l'une des revendications 1 à 5, **caractérisé en ce que** le conducteur de saisie de signal de mesure est un conducteur λ/4, dans lequel λ est la longueur d'onde de la fréquence porteuse du signal d'émission de l'installation d'antenne émettrice.

7. Dispositif de surveillance (4') selon l'une des revendications 1 à 6, **caractérisé en ce que** pour une installation d'antenne émettrice dotée d'une antenne ouverte galvaniquement, l'unité de contrôle et de commande imprime un courant de mesure dans le conducteur intérieur par le biais du conducteur de saisie de signal de mesure, et mesure la résistance entre le conducteur extérieur et le conducteur intérieur du trajet de puissance (2') et, lorsque la résistance mesurée est inférieure à une résistance minimale pouvant être prédéfinie, fournit à sa sortie un signal d'ouverture pour l'interrupteur et/ou fournit à sa sortie un signal d'affichage destiné à l'affichage optique de la résistance mesurée ou d'une valeur caractérisant celle-ci.

8. Dispositif de surveillance (4') selon l'une des revendications 1 à 7, **caractérisé en ce que** pour une installation d'antenne émettrice (1') dotée d'une antenne fermée galvaniquement, l'unité de contrôle et de commande effectue par le biais du conducteur de saisie de signal de mesure une mesure de la résistance du circuit électrique formé par le conducteur extérieur, le conducteur intérieur et l'antenne et, lorsque la résistance mesurée est supérieure à une résistance maximale autorisée pouvant être prédéfinie, fournit à sa sortie un signal d'ouverture pour l'interrupteur et/ou fournit un signal d'affichage destiné à l'affichage optique de la résistance mesurée ou d'une valeur caractérisant celle-ci.

9. Dispositif de surveillance (4') selon l'une des revendications 1 à 8, **caractérisé en ce que** le conducteur de saisie de signal de mesure peut être relié galvaniquement au conducteur intérieur d'un connecteur en pont de l'installation d'antenne émettrice (1').

10. Procédé de surveillance d'une installation d'antenne émettrice (1'), comportant un trajet de transport de puissance (2') doté d'un conducteur intérieur et d'un conducteur extérieur,
- dans lequel, lors du procédé, un signal de mesure est saisi depuis le conducteur intérieur par le biais d'un conducteur de saisie de signal de mesure relié à celui-ci, et
- une valeur de mesure du signal de mesure dans un intervalle de fréquence entre 0 et 60 kHz pouvant être prédéfini est comparée à une valeur seuil et
- ensuite, si la valeur de mesure dans l'intervalle de fréquence spécifié est supérieure à la valeur seuil, la fourniture d'un signal d'émission à l'installation d'antenne d'émission (1') est interrompue au moins temporairement.

11. Procédé selon la revendication 10, **caractérisé en ce qu'**une valeur de mesure du signal de mesure dans un intervalle de fréquence entre 0 et 20 kHz pouvant être prédéfini est comparée à une valeur seuil et ensuite, si la valeur de mesure dans l'intervalle de fréquence spécifié est supérieure à la valeur seuil, la fourniture d'un signal d'émission à l'installation d'antenne d'émission (1') est interrompue au moins temporairement.

12. Procédé selon la revendication 10 ou 11, **caractérisé en ce qu'**un conducteur λ/4 est utilisé comme conducteur de saisie de signal de mesure, dans lequel λ est la longueur d'onde de la fréquence porteuse du signal d'émission de l'installation d'antenne émettrice (1').

13. Procédé selon l'une des revendications 10 à 12, **caractérisé en ce que** pour une installation d'antenne émettrice (1') dotée d'une antenne ouverte galvaniquement, un courant de mesure est imprimé dans le conducteur intérieur par le biais du conducteur de saisie de signal de mesure, et la résistance entre le conducteur extérieur et le conducteur intérieur du trajet de puissance (2') est mesurée et, lorsque la résistance mesurée est inférieure à une résistance minimale pouvant être prédéfinie, la fourniture du signal d'émission à l'installation d'antenne émettrice (1') est interrompue au moins temporairement et/ou un signal d'affichage destiné à l'affichage optique de la résistance mesurée ou d'une valeur caractérisant celle-ci est émis.

14. Procédé selon l'une des revendications 10 à 13, **caractérisé en ce que** pour une installation d'antenne émettrice (1') dotée d'une antenne fermée galvaniquement, une mesure de la résistance du circuit électrique formé par le conducteur extérieur, le conducteur intérieur et l'antenne est effectuée par le biais du conducteur de saisie de signal de mesure et, lorsque la résistance mesurée est supérieure à une résistance maximale autorisée pouvant être prédéfinie, un signal d'ouverture pour l'interrupteur est émis à sa sortie et/ou un signal d'affichage destiné à l'affichage optique de la résistance mesurée ou d'une valeur caractérisant celle-ci est émis.

15. Procédé selon l'une des revendications 10 à 14, **caractérisé en ce que** le conducteur de saisie de signal de mesure est relié galvaniquement au conducteur intérieur d'un connecteur en pont de l'installation d'antenne émettrice (1').

16. Installation d'antenne émettrice comportant un trajet de transport de puissance (2') doté d'un conducteur intérieur et d'un conducteur extérieur et d'un dispositif de surveillance (4') selon l'une des revendications 1 à 9.
